# EUROPEAN PATENT APPLICATION

(11) **EP 4 468 663 A1**
(43) Date of publication of application: **27.11.2024**
(21) Application number: 22921087.7
(22) Date of filing: 19.01.2022
(51) Int. Cl.: H04L 25/02

(54) **CHANNEL ESTIMATION METHOD, CHANNEL ESTIMATION MODEL TRAINING METHOD, AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: TIAN, Wenqiang, Dongguan, Guangdong 523860 (CN)
(74) Representative: RGTH
(86) International application number: PCT/CN2022/072828
(87) International publication number: WO 2023/137641

(57) **Abstract**

Embodiments of the present disclosure provide a channel estimation method, a method for training a channel estimation model and a communication device. The method includes: obtaining first information, where the first information is information corresponding to a first reference signal pattern; performing conversion on the first information to obtain second information, where the second information is information corresponding to a second reference signal pattern, and the second information includes the first information; and outputting first estimation information using a channel estimation model, with the second information as an input. The method provided by the embodiments of the present disclosure may implement estimation of pieces of reference information in different signal patterns, and reduce the complexity of channel estimation.

## Description

### TECHNICAL FIELD

Embodiments of the present disclosure relate to the field of communications, and in particular, to a channel estimation method, a method for training a channel estimation model, and a communication device.

### BACKGROUND

In a communication system architecture, the quality of channel environment and whether the current channel environment can be accurately estimated are crucial to the performance of the wireless communication system. Generally speaking, during the design of a wireless communication system, a transmitting side (such as a network device) may send a pilot signal, such as a CSI-RS signal, a DMRS signal, a PT-RS signal or an SSB signal, to assist a receiving side (such as a terminal device) in obtaining or estimating the current channel feature. Subsequently, the receiving side may feed back corresponding channel information to the transmitting side based on estimated or recovered channel feature, so that the transmitting side may conduct corresponding operations such as coding and modulation based on the obtained channel information.

Heretofore, traditional channel estimation methods include the minimum mean square error (MMSE) algorithm.

However, due to significant characteristics of an actual channel such as complexity, nonlinearity, and time-varying, although the traditional channel estimation methods can estimate and retrieve a channel to a certain extent based on a pilot channel, these methods cannot achieve the optimal channel estimation and recovery effect based on requirements, which reduces the channel estimation performance and channel recovery performance. Furthermore, if communication mechanism selection and data transmission are performed based on the inaccurate channel estimation and recovery result, the data transmission performance may be further reduced.

### SUMMARY

Embodiments of the present disclosure provide a channel estimation method, a method for training a channel estimation model and a communication device, which may not only improve the channel estimation performance and channel recovery performance, thereby improving the data transmission performance, but also implement estimation of information of reference signals in different signal patterns, and as well as obtain estimation information of channels in different channel formats, thereby reducing the complexity of channel estimation.

In a first aspect, the present disclosure provides a wireless communication method, which includes:
obtaining first information, where the first information is information corresponding to a first reference signal pattern;
performing conversion on the first information to obtain second information, where the second information is information corresponding to a second reference signal pattern, and the second information includes the first information; and
outputting first estimation information using a channel estimation model, with the second information as an input.

In a second aspect, the present disclosure provides a method for training a channel estimation model, which includes:
obtaining first information, where the first information is information corresponding to a first reference signal pattern;
performing conversion on the first information to obtain second information, where the second information is information corresponding to a second reference signal pattern, and the second information includes the first information;
obtaining second estimation information, where the second estimation information is estimation information corresponding to a second channel format, and the second channel format is a channel format corresponding to the first reference signal pattern;
performing conversion on the second estimation information to obtain first estimation information, where the first channel format is a channel format corresponding to the second reference signal pattern, and the first estimation information includes the second estimation information; and
training the channel estimation model with the second information and the first estimation information as inputs.

In a third aspect, the present disclosure provides a communication device for performing the method in any one of the first and second aspect or various implementations thereof. Specifically, the communication device includes a functional module for performing the method in any one of the first and second aspects or the various implementations thereof.

In one implementation, the communication device may include a processing unit configured to implement functions related to information processing. For example, the processing unit may be a processor.

In one implementation, the communication device may include a transmitting unit and/or a receiving unit. The transmitting unit is configured to implement functions related to transmission, and the receiving unit is configured to implement functions related to reception. For example, the transmitting unit may be a transmitter or a transmitting device, and the receiving unit may be a receiver or a receiving device. As another example, the communication device is a communication chip, the transmitting unit may be an input circuit or an input interface of the communication chip, and the transmitting unit may be an output circuit or an output interface of the communication chip.

In a fourth aspect, the present disclosure provides a communication device including a processor and a memory. The memory is configured to store a computer program, and the processor is configured to call and run the computer program stored in the memory to perform the method in any one of the first and second aspects or the various implementations thereof.

In one implementation, the processor is singular or plural, and the memory is singular or plural.

In one implementation, the memory may be integrated with the processor, or the memory may be separated from the processor.

In one implementation, the communication device further includes a transmitter (a transmitting device) and a receiver (a receiving device).

In a fifth aspect, the present disclosure provides a chip for implementing the method in any one of the first and second aspects or the various implementations thereof. Specifically, the chip includes: a processor configured to call and run a computer program from a memory to cause a device installed with the chip to perform the method in any one of the first and second aspects or the various implementations thereof.

In a sixth aspect, the present disclosure provides a computer-readable storage medium configured to store a computer program. The computer program causes a computer to perform the method in any one of the first and second aspects or the various implementations thereof.

In a seventh aspect, the present disclosure provides a computer program product including computer program instructions. The computer program instructions cause a computer to perform the method in any one of the first and second aspects or the various implementations thereof.

In an eighth aspect, the present disclosure provides a computer program that, when executed on a computer, causes the computer to perform the method in any one of the first and second aspects or the various implementations thereof.

Based on the foregoing technical solutions, estimating channel information using a channel estimation model may improve the channel estimation performance and channel recovery performance, thereby improving the data transmission performance. In addition, the present disclosure performs conversion on first information corresponding to a first reference signal pattern according to a second reference signal pattern to obtain second information, and the second information is used as input information of the channel estimation model for estimating channel information, which is equivalent to converting information in a non-standard format into second information in a standard format, and then using the second information in the standard format as input information of the channel estimation model to perform channel estimation, thereby implementing estimation of information of reference signals in different signal patterns, obtaining estimation information of channels in different channel formats, and reducing the complexity of channel estimation.

### BRIEF DESCRIPTION OF THE DRAWINGS

FIG. 1 shows an example of a system architecture provided by embodiments of the present disclosure;
FIG. 2 is a schematic diagram of a workflow of a transmitter at a transmitting side provided by embodiments of the present disclosure;
FIG. 3 is a schematic diagram showing performing channel estimation based on a pilot channel provided by embodiments of the present disclosure;
FIG. 4 is a schematic diagram of a neural network provided by embodiments of the present disclosure;
FIG. 5 is a schematic diagram showing performing channel estimation using a channel estimation model provided by embodiments of the present disclosure;
FIG. 6 is a schematic flowchart of a channel estimation method provided by embodiments of the present disclosure;
FIG. 7 is a schematic diagram showing configurations of different reference signals provided by embodiments of the present disclosure;
FIGS. 8 to 10 are schematic diagrams showing converting first information into second information according to a second reference signal pattern provided by embodiments of the present disclosure;
FIG. 11 is a schematic diagram based on a first channel format provided by embodiments of the present disclosure;
FIG. 12 is a schematic diagram showing obtaining second estimation information from first estimation information provided by embodiments of the present disclosure;
FIG. 13 is a schematic flowchart of obtaining first estimation information based on second information in a second reference signal pattern provided by embodiments of the present disclosure;
FIGS. 14 to 16 are schematic diagrams showing converting first information into second information based on a second local channel format provided by embodiments of the present disclosure;
FIG. 17 is a schematic flowchart of obtaining first estimation information based on second information in a second local channel format provided by embodiments of the present disclosure;
FIG. 18 is a schematic flowchart of a method for training a channel estimation model provided by embodiments of the present disclosure;
FIGS. 19 to 21 are schematic block diagrams of a communication device provided by embodiments of the present disclosure; and
FIG. 22 is a schematic block diagram of a chip provided by embodiments of the present disclosure.

### DETAILED DESCRIPTION

Technical solutions in the embodiments of the present disclosure will be described with reference to the accompanying drawings.

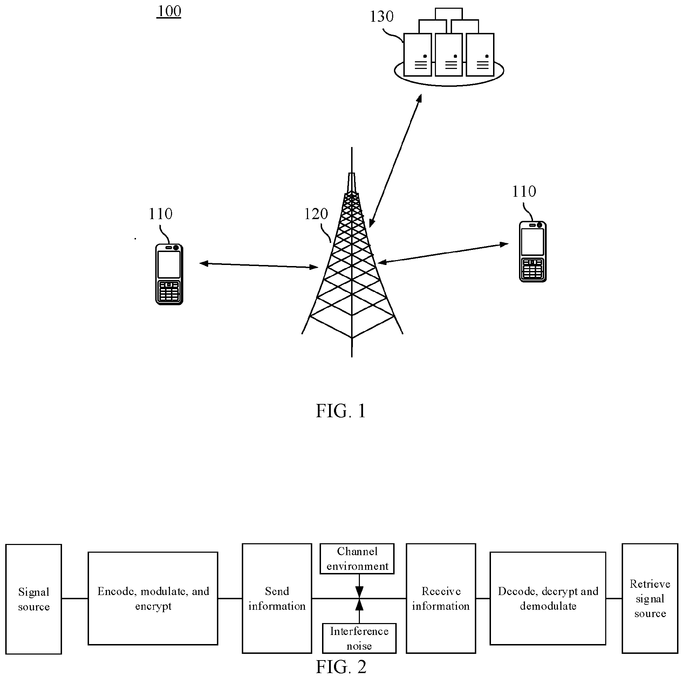

FIG. 1 shows an example of a system architecture provided by the embodiments of the present disclosure.

As shown in FIG. 1, a communication system 100 may include a terminal device 110 and a network device 120. The network device 120 may communicate with the terminal device 110 through an air interface. Multi-service transmission is supported between the terminal device 110 and the network device 120.

It should be understood that the communication system 100 is merely used as an example to describe the embodiments of the present disclosure, but the embodiments of the present disclosure are not limited thereto. That is, the technical solutions of the embodiments of the present disclosure may be applied to various communications systems, such as a long term evolution (LTE) system, an LTE time division duplex (TDD), a universal mobile telecommunication system (UMTS), an Internet of things (IoT) system, a narrow band Internet of things (NB-IoT) system, an enhanced machine-type communications (eMTC) system, a 5G communication system (also referred to as a new radio (NR) communication system), and a future communication system.

In the communication system 100 shown in FIG. 1, the network device 120 may be an access network device that communicates with the terminal device 110. The access network device may provide communication coverage for a specific geographical area, and may communicate with the terminal device 110 (e.g., a UE) located in the coverage area.

The network device 120 may be an evolutional base station (Evolutional Node B, eNB or eNodeB) in a long term evolution (LTE) system, or a next generation radio access network (NG RAN) device, or a base station (gNB) in an NR system, or a wireless controller in a cloud radio access network (CRAN);alternatively, the network device 120 may be a relay station, an access point, a vehicle-mounted device, a wearable device, a hub, a switch, a network bridge, a router, a network device in a public land mobile network (PLMN) evolved in the future, or the like.

The terminal device 110 may be any terminal device, including but not limited to a terminal device in a wired or wireless connection with the network device 120 or other terminal devices.

For example, the terminal device 110 may refer to an access terminal, a user equipment (UE), a subscriber unit, a subscriber station, a mobile station, a mobile console, a remote station, a remote terminal, a mobile device, a user terminal, a terminal, a wireless communication device, a user agent, or a user apparatus. The access terminal may be a cellular phone, a cordless phone, a session initiation protocol (SIP) phone, an IoT device, a satellite handheld terminal, a wireless local loop (WLL) station, a personal digital assistant (PDA), a handheld device having a wireless communication function, a computing device or other processing device connected to a wireless modem, a vehicle-mounted device, a wearable device, a terminal device in a 5G network or a terminal device in a future evolution network, or the like.

The terminal device 110 may be used for device to device (D2D) communication.

The wireless communications system 100 may further include a core network device 130 which communicates with a base station. The core network device 130 may be a 5G core (5GC) network device, for example, an access and mobility management function (AMF), as another example, an authentication server function (AUSF), as yet another example, a user plane function (UPF), as still another example, a session management function (SMF). Optionally, the core network device 130 may also be an evolved packet core (EPC) device in an LTE network, for example, a session management function + core packet gateway (SMF+PGW-C) device. It should be understood that SMF+PGW-C may implement both the functions that SMF can implement and the functions that PGW-C can implement. In the evolution process of the network, the core network device may also be called other names, or new network entities may be formed by dividing the functions of the core network, which are not limited in the embodiments of the present disclosure.

The various functional units in the communication system 100 may also communicate with each other by establishing connections via next generation (NG) network interfaces.

For example, the terminal device establishes an air interface connection with the access network device via an NR interface, for transmission of user-plane data and control-plane signaling. The terminal device may establish a control-plane signaling connection to AMF via an NG interface 1 (N1 for short). The access network device, such as a next generation radio access base station (gNB), may establish a user-plane data connection to UPF via an NG interface 3 (N3 for short). The access network device may establish a control-plane signaling connection to AMF via an NG interface 2 (N2 for short). UPF may establish a control-plane signaling connection to SMF via an NG interface 4 (N4 for short). UPF may exchange user-plane data with a data network via an NG interface 6 (N6 for short). AMF may establish a control-plane signaling connection to SMF via an NG interface 11 (N11 for short). SMF may establish a control-plane signaling connection with PCF via an NG interface 7 (N7 for short).

FIG. 1 exemplarily illustrates one network device, one core network device and two terminal devices. Optionally, the wireless communication system 100 may include a plurality of network devices, each of which may have a coverage area in which other number of terminal devices may be included, which is not limited in the embodiments of the present disclosure.

It should be understood that any device with a communication function in the network/system in the embodiments of the present disclosure can be referred to as a communication device. Taking the communication system 100 shown in FIG. 1 as an example, communication devices may include the network device 120 and the terminal device 110 that have a communication function. The network device 120 and the terminal device 110 may be the devices described above and will not be repeated here. The communication devices may further include other devices in the communication system 100, such as a network controller, a mobile management entity and other network entities, which is not limited in the embodiments of the present disclosure.

It should be understood that terms "system" and "network" herein are often used interchangeably herein. The term "and/or" herein is only an association relationship to describe associated objects, which indicates that there may be three kinds of relationships. For example, A and/or B may indicate three cases where: A exists alone, both A and B exist, and B exists alone. In addition, a character "/" herein generally indicates that related objects before and after "/" are in an "or" relationship.

It should also be understood that the term "correspond" involved in the embodiments of the present disclosure may mean that there is a direct or indirect correspondence between two elements, or may indicate an association between two elements, or may indicate a relationship of indicating and being indicated, configuring and being configured. It should also be understood that the term "predefined" or "predefined rules" involved in the embodiments of the present disclosure may be achieved by pre-storing corresponding codes, tables or other manners that can be used to indicate relevant information in devices (e.g., including a terminal device and a network device). The specific implementation is not limited in the present disclosure. For example, the "predefined" may refer to those defined in a protocol. It should also be understood that, in the embodiments of the present disclosure, "protocols" may refer to standard protocols in the field of communication, which may include, for example, an LTE protocol, an NR protocol and the relevant protocol applied in the future communication system, which is not limited in the present disclosure.

FIG. 2 is a schematic diagram of a workflow of a transmitter at a transmitting side provided by the embodiments of the present disclosure.

As shown in FIG. 2, in a wireless communication system, the workflow of a transmitter at a transmitting side includes that, at the transmitting side, the transmitter performs operations such as encoding, modulating, and encrypting on a signal source. Transmission information to be transmitted can be formed through the workflow of the transmitter. The transmission information is transmitted to a receiving side through a wireless space. Correspondingly, the receiving side receives information transmitted from the transmitting side, and performs operations such as decoding, decryption and demodulation on the received information, and finally retrieves signal source information.

In the above basic communication system architecture, the quality of channel environment and whether the current channel environment can be accurately estimated are crucial to the performance of the wireless communication system. Generally speaking, during the design of a wireless communication system, a transmitting side (such as a network) may send some pilot signals, such as channel state information reference signals (CSI-RSs), demodulation reference signals (DMRSs), phase tracking reference signal (PT-RSs), or synchronization signal and/or physical broadcast channel blocks (synchronization signal/PBCH blocks (SSBs)), to assist a receiving side (such as a user) in obtaining and estimating the current channel feature. Subsequently, the user may feed back corresponding channel information to the network based on the estimated or recovered channel feature, and finally, the network conducts corresponding operations such as coding and modulation based on the obtained channel information.

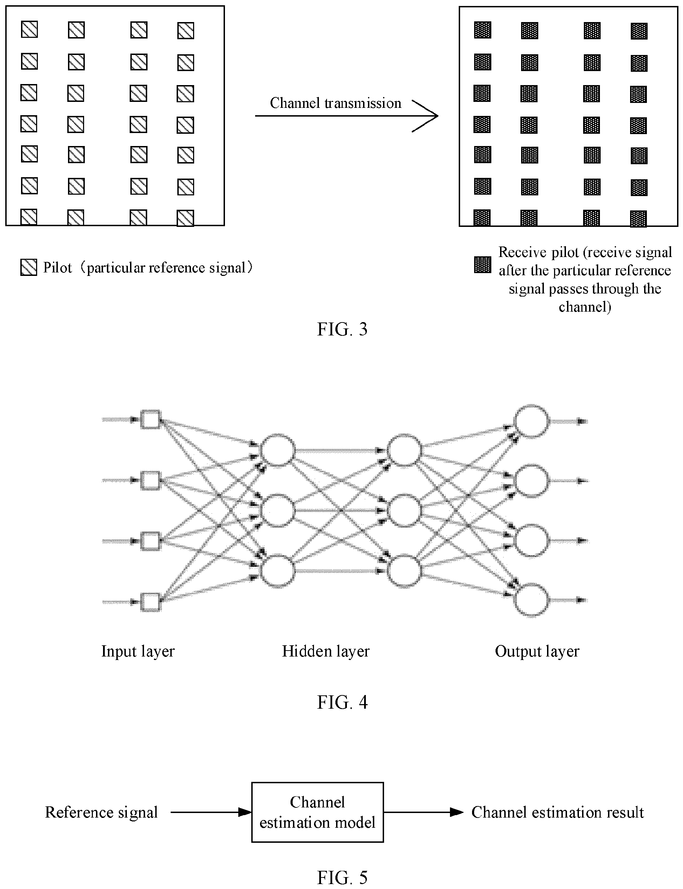

FIG. 3 is a schematic diagram showing performing channel estimation based on a pilot channel provided by the embodiments of the present disclosure.

As shown in FIG. 3, a network sends a specific pilot signal, and the pilot signal is received at a receiving side after being propagated through a channel. A user at the receiving side may estimate the condition of a channel through which the pilot channel passes based on a received pilot signal and the actual pilot signal. Basic channel estimation methods include the minimum mean square error (MMSE) algorithm. After obtaining channel information at the pilot signal, the user and a base station can use basic interpolation method or other methods to retrieve channel information in each time slot of the complete broadband, and then perform corresponding operations such as channel quality feedback, or data scheduling.

In recent years, artificial intelligence research represented by neural networks has achieved great success in many fields, which will also play an important role in people's production and life for a long time in the future. In the present disclosure, a neural network may be used to estimate channel information.

FIG. 4 is a schematic diagram a neural network provided by the embodiments of the present disclosure.

As shown in FIG. 4, the basic structure of the neural network may include: an input layer, a hidden layer, and an output layer. The input layer is responsible for receiving data, the hidden layer processes data, and the final result is generated at the output layer. In the neural network, each node represents a processing unit, which may be considered as a simulation of a neuron. A plurality of neurons form a single-layer neural network. Multi-layer neural networks used for information transmission and processing may form an overall neural network.

Of course, with the continuous development of research on the neural network, neural network deep learning algorithms have been proposed in recent years. That is, a large number of hidden layers may be introduced, and feature learning may be implemented through layer-by-layer training of a neural network with a plurality of hidden layers, which may greatly improve the learning and processing capabilities of the neural network. Neural network deep learning algorithms are widely used in aspects such as pattern recognition, signal processing, optimization combination, and anomaly detection. Similarly, the present disclosure may also use a neural network deep learning algorithm for channel estimation. In addition, with the development of deep learning, convolutional neural networks have also been further studied. In a convolutional neural network, its basic structure includes: an input layer, a plurality of convolutional layers, a plurality of pooling layers, a fully connected layer, and an output layer. The introduction of the convolutional layers and pooling layers effectively controls the sharp increase of network parameters, limits the number of the parameters, explores the characteristics of local structures, and improves the robustness of the algorithm. Similarly, the present disclosure may also use a convolutional neural network for channel estimation. In addition, new network model designs and structure designs such as a convolutional neural network (RNN), a long short-term memory

(LSTM) neural network, a transformer-based network, and attention mechanisms have been continuously proposed and have been well applied in many fields, which may also be used for channel information estimation by the present disclosure.

The structure of a basic wireless communication system is explained in the foregoing, and the importance of channel estimation is emphasized. Although the traditional channel estimation algorithm (e.g., MMSE algorithm) can achieve estimation and recovery of a channel to a certain extent based on a pilot channel, due to the significant characteristics of an actual channel such as the complexity, nonlinearity, and time-varying, the traditional methods are not always able to achieve the optimal channel estimation and recovery effects based on requirements. In this case, communication mechanism selection and data transmission performance that are based on an inaccurate channel estimation and recovery result will be affected. The present disclosure considers using a neural network to solve the above-mentioned performance gain problem in channel estimation, that is, a channel estimation model may be used to estimate channel information.

FIG. 5 is a schematic diagram showing performing channel estimation using a channel estimation model provided by the embodiments of the present disclosure.

As shown in FIG. 5, reference information obtained based on a reference signal received by UE, or local channel information obtained through the reference signal (e.g., channel information at a time-frequency position corresponding to the reference signal) is used as basic input information of a model, and then the trained channel estimation model is used to eventually obtain results of a relatively good channel estimation.

However, it should be pointed out that for the channel estimation model, an interface is generally fixed and an applicable scenario is generally single. For example, for a certain channel estimation model, in the case where reference information obtained based on a reference signal is used as its model input, the sequence, format, and position of the reference signal are generally a given sequence, format, and position, and channel environment and configuration corresponding thereto are generally a particular type of channel environment and feature configuration. For example, in the case where the reference signal is a ZC sequence and corresponds to 32 antenna ports, a reference signal arrangement position in the time-frequency position is a particular pattern (Pattern) specified by the 3GPP protocol and receive antenna ports are 4 ports. In the case where the sequence of the reference signal changes, or transmit antenna ports are 16 ports, or the time-frequency position, time domain density, and frequency domain density change, or the receive antenna ports are changed to 2 ports, the channel estimation model corresponding to the above fixed interface, scenario, and environment becomes unavailable. In this case, one solution is to construct different channel estimation models according to different transmission features, reception features, and transmission environment features, and then apply an optimal channel estimation model according to different conditions. Another solution is to construct a universal channel estimation model according to different transmission features, reception features, and transmission environment features, so as to avoid frequent scenario recognition and pattern matching, thereby improving the generalization performance of a channel estimation model.

In view of this, the design of the present disclosure will give a solution for performing channel estimation using a universal channel estimation model and adapting pieces of reference information in different reference signal patterns.

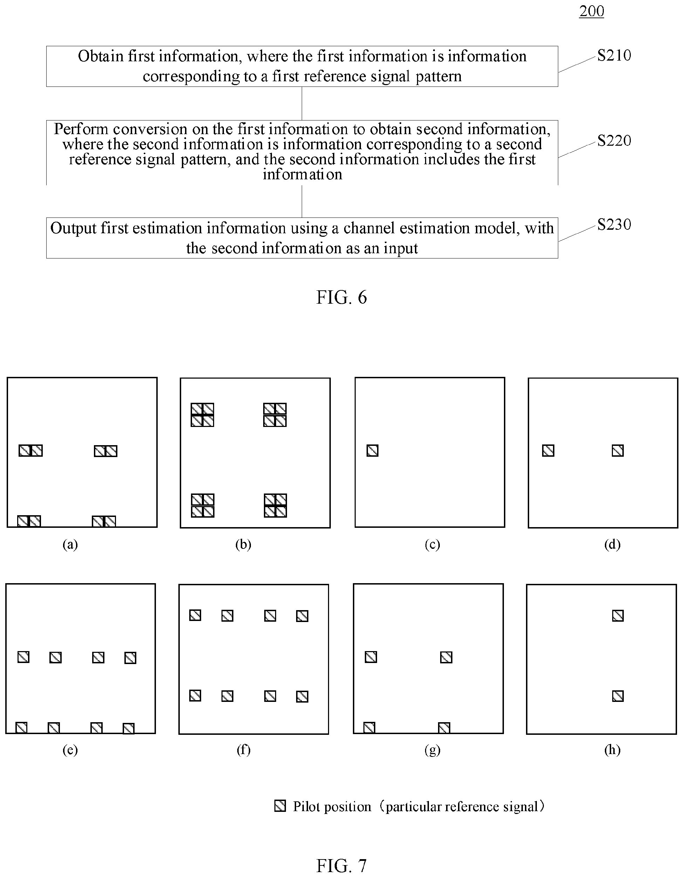

FIG. 6 is a schematic flowchart of a wireless communication method 200 provided by embodiments of the present disclosure. The wireless communication method 200 may be performed by a communication device, which may be a terminal device or a network device. For example, the method 200 may be performed by a terminal device shown in FIG. 1 or an access network device shown in FIG. 1.

As shown in FIG. 6, the method 200 may include:
S210: obtaining, by a communication device, first information, where the first information is information corresponding to a first reference signal pattern;
S220: performing, by the communication device, conversion on the first information to obtain second information, where the second information is information corresponding to a second reference signal pattern, and the second information includes the first information; and
S230: outputting, by the communication device, first estimation information using a channel estimation model, with the second information as an input.

In this embodiment, a channel estimation model is used to estimate channel information, which may improve channel estimation performance and channel recovery performance, thereby improving the data transmission performance. In addition, the present disclosure converts first information corresponding to a first reference signal pattern according to a second reference signal pattern to obtain second information, and the second information is used as input information of the channel estimation model for estimating channel information, which is equivalent to converting information in a non-standard format into second information in a standard format, and then using the second information in the standard format as input information of the channel estimation model to perform channel estimation, thereby implementing estimation of information of reference signals in different signal patterns, obtaining estimation information of channels in different channel formats, and reducing the complexity of channel estimation.

It should be understood that the communication device may be a terminal device or a network device. If the communication device is a terminal device, a reference signal corresponding to the first reference signal pattern is a downlink reference signal, for example, the reference signal corresponding to the first reference signal pattern is a CSI-RS or a downlink DMRS. If the communication device is a network device, the reference signal corresponding to the first reference signal pattern is an uplink reference signal, for example, the reference signal corresponding to the first reference signal pattern is an SRS or an uplink DMRS.

Exemplarily, a reference signal received by the communication device is the reference signal corresponding to the first reference signal pattern, and the communication device obtains the first information based on the reference signal corresponding to the first reference signal pattern, and the first reference signal pattern is a pattern of a reference signal for a non-standard interface. The input information of the channel estimation model is the second information corresponding to the second reference signal pattern, and the second reference signal pattern is a pattern of a reference signal for a standard interface. The present disclosure performs converting on the first information (i.e., the information obtained based on the reference signal for the non-standard interface) to obtain the second information (i.e., the information corresponding to the reference signal for the standard interface). The second information obtained after converting may be used as an input for training, testing, reasoning, and applying.

Of course, in other alternative embodiments, the first information may also be referred to as non-standard interface information, and the second information may also be referred to as standard interface information.

In some embodiments, S210 may include:
determining first reference information that is obtained based on the reference signal corresponding to the first reference signal pattern as the first information; and
determining estimation information that is obtained by estimating, based on the first reference information, channel information at partial positions of a channel format corresponding to the first reference signal pattern as the first information.

Exemplarily, the first reference information may be reference signal quality information, that is, the communication device may determine the reference signal quality information obtained based on the reference signal corresponding to the first reference signal pattern as the first information. Alternatively, the communication device may first obtain the reference signal quality information based on the reference signal corresponding to the first reference signal pattern, and then estimate, based on the obtained reference signal quality information, channel information at partial positions of the channel format corresponding to the first reference signal pattern to obtain estimation information, and finally determine the obtained estimation information as the first information.

It should be understood that in the case where the communication device determines the estimation information obtained by estimating, based on the first reference information, the channel information at partial positions of the channel format corresponding to the first reference signal pattern as the first information, the first information may also be referred to as local channel estimation information, and the channel format corresponding to the first reference signal pattern may also be referred to as a first local channel format. For example, the first local channel format and the first reference signal pattern may be the same format.

In some embodiments, the second reference signal pattern is predefined, or configured by a network device.

In some embodiments, the second reference signal pattern includes the first reference signal pattern and at least one third reference signal pattern. S220 may include:
obtaining third information corresponding to the at least one third reference signal pattern; and
performing padding on the first information based on the third information to obtain the second information.

Exemplarily, for the first reference signal pattern, after the communication device obtains the third information, the communication device pads the third information at positions included in the second reference signal pattern other than positions included in the first reference signal pattern to obtain the second information.

In some embodiments, the third information is obtained according to at least one of the following manners:
determining a preset value or a random number as the third information;
determining part or all of the first information as the third information; or
performing calculation on the first information using a first algorithm to obtain the third information.

In some embodiments, the first algorithm includes at least one of the following: an averaging algorithm, a filtering computation, or an interpolation algorithm.

Exemplarily, the method for the communication device to convert the first information into the second information according to the second reference signal pattern may be one or more of the following:
(1) For the first reference signal pattern, performing padding at the positions included in the second reference signal pattern other than the positions included in the first reference signal pattern with a 0, a constant, random noise, or a random number to obtain the second information;
(2) For the first reference signal pattern, performing padding, using the first information, at the positions included in the second reference signal pattern other than the positions included in the first reference signal pattern to obtain the second information; or
(3) For the first reference signal pattern, performing corresponding calculation on the first information using mathematical calculation (i.e., an averaging algorithm, a filtering algorithm, or an interpolation algorithm), and performing padding with the calculation result at the positions included in the second reference signal pattern other than the positions included in the first reference signal pattern to obtain the second information.

That is to say, in the present disclosure, for the first reference signal pattern, padding is performed on the first information according to the second reference signal pattern to obtain the second information, and the second information obtained after padding is used as input information of the channel estimation model.

In some embodiments, the second reference signal pattern is a union or superset of the first reference signal pattern and a signal patter of the at least one third reference signal.

In some embodiments, the second reference signal pattern is a union of the first reference signal pattern, the at least one third reference signal pattern, and at least one fourth reference signal pattern. The at least one fourth reference signal pattern is determined according to the first reference signal pattern, or the at least one fourth reference signal pattern is determined according to part or all of the at least one third reference signal pattern.

Exemplarily, the at least one fourth reference signal is format(s) obtained by offsetting the positions included in the first reference signal pattern in the time domain or the frequency domain; or the at least one fourth reference signal is format(s) obtained by offsetting positions included in part or all of the at least one third reference signal pattern in the time domain or the frequency domain. For example, the at least one fourth reference signal is format(s) obtained by offsetting the position(s) included in the first reference signal pattern in the time domain or the frequency domain, for ensuring that the union (i.e., the second reference signal pattern) of the first reference signal pattern, the at least one third reference signal pattern, and the at least one fourth reference signal pattern is of a symmetrical structure; or the at least one fourth reference signal is format(s) obtained by offsetting the positions included in part or all of the at least one third reference signal pattern in the time domain or the frequency domain, for ensuring that the union (i.e., the second reference signal pattern) of the first reference signal pattern, the at least one third reference signal pattern, and the at least one fourth reference signal pattern is of a symmetrical structure.

In some embodiments, a signal type of the reference signal corresponding to the first reference signal pattern is different from a signal type of a reference signal corresponding to the third reference signal pattern; and/or a configuration of the reference signal corresponding to the first reference signal pattern is different from a configuration of the reference signal corresponding to the third reference signal pattern.

Exemplarily, the communication device may determine the first reference signal pattern according to a signal type of a reference signal received by the communication device. For example, the communication device may determine a signal pattern used by a signal type of a reference signal received by the communication device as the first reference signal pattern. Optionally, the signal type of the reference signal corresponding to the first reference signal pattern may be SRS, uplink DMRS, CSI-RS or downlink DMRS. For example, in the case where the signal type of the reference signal corresponding to the first reference signal pattern is SRS, the communication device may determine the signal pattern of the SRS as the first reference signal pattern.

Exemplarily, in the case where the reference signal corresponding to the first reference signal pattern is an uplink reference signal, the reference signal corresponding to the first reference signal pattern and the reference signal corresponding to the third reference signal pattern are uplink reference signals in different types. In the case where the reference signal corresponding to the first reference signal pattern is a downlink reference signal, the reference signal corresponding to the first reference signal pattern and the reference signal corresponding to the third reference signal pattern are downlink reference signals in different types.

Exemplarily, the communication device may determine the first reference signal pattern according to a configuration of a reference signal received by the communication device. For example, the communication device may determine a signal pattern corresponding to the configuration of the reference signal received by the communication device as the first reference signal pattern. For example, in the case where the configuration of the reference signal received by the communication device includes a time domain resource configuration and a frequency domain resource configuration, the communication device may determine time-frequency domain resource positions corresponding to the time domain resource configuration and the frequency domain resource configuration as the positions included in the first reference signal pattern.

In some embodiments, the configuration of the reference signal corresponding to the first reference signal pattern or the configuration of the reference signal corresponding to the third reference signal pattern includes at least one of the following configurations: a time domain resource configuration, a frequency domain resource configuration, a receive antenna configuration, a transmit antenna configuration, or a sequence configuration.

In some embodiments, the first estimation information is channel estimation information corresponding to a first channel format, and the first estimation information includes second estimation information corresponding to a second channel format. The first channel format is a channel format corresponding to the second reference signal pattern, and the second channel format is a channel format corresponding to the first reference signal pattern. The method 200 may further include:
obtaining the second estimation information from the first estimation information based on the first channel format and the second channel format.

In some embodiments, the first channel format is predefined, or configured by a network device.

In some embodiments, the first channel format includes the second channel format and at least one third channel format.

In some embodiments, the first channel format is a union or superset of the second channel format and the at least one third channel format.

In some embodiments, the first channel format is a union of the second channel format, the at least one third channel format, and at least one fourth channel format. The at least one fourth channel format is determined according to the second channel format or the at least one fourth channel format is determined according to part or all of the at least one third channel format.

Exemplarily, the at least one fourth channel is format(s) obtained by offsetting positions included in the first channel format in the time domain or the frequency domain; or the at least one fourth channel is format(s) obtained by offsetting positions included in part or all of the at least one third channel format in the time domain or the frequency domain. For example, the at least one fourth channel is format(s) obtained by offsetting the positions included in the first channel format in the time domain or the frequency domain, for ensuring that the union (i.e., the first channel format) of the first channel format, the at least one third channel format and the at least one fourth channel format is of a symmetrical structure; or the at least one fourth channel is format(s) obtained by offsetting the positions included in part or all of the at least one third channel format in the time domain or the frequency domain, for ensuring that the union (i.e., the first channel format) of the first channel format, the at least one third channel format and the at least one fourth channel format is a symmetrical structure.

In some embodiments, a type of a channel corresponding to the second channel format is different from a type of a channel corresponding to the third channel format; and/or a configuration of the channel corresponding to the second channel format is different from the configuration of the channel corresponding to the third channel format.

Exemplarily, the communication device may determine the second channel format according to a type of a channel to be estimated by the communication device. For example, the communication device may determine a signal pattern used by the type of the channel to be estimated by the communication device as the second channel format. Optionally, the signal type of the channel corresponding to the second channel format may be a physical uplink control channel (PUCCH), a physical uplink shared channel (PUSCH), a physical downlink control channel (PDCCH), a physical broadcast channel (PBCH), a physical downlink shared channel (PDSCH), or a physical random access channel (PRACH). For example, in the case where the type of the channel corresponding to the second channel format is PUCCH, the communication device may determine the format of the PUCCH as the second channel format.

Exemplarily, in the case where the channel corresponding to the second channel format is an uplink channel, the channel corresponding to the second channel format and the channel corresponding to the third channel format are uplink channels in different types. In the case where the channel corresponding to the second channel format is a downlink channel, the channel corresponding to the second channel format and the channel corresponding to the third channel format are downlink channels in different types.

Exemplarily, the communication device may determine the second channel format according to the configuration of the channel to be estimated by the communication device. For example, the communication device may determine the signal pattern corresponding to the configuration of the channel to be estimated by the communication device as the second channel format. For example, in the case where the configuration of the channel to be estimated by the communication device includes a time domain resource configuration and a frequency domain resource configuration, the communication device may determine time-frequency domain resource positions corresponding to the time domain resource configuration and the frequency domain resource configuration as the positions included in the second channel format.

In some embodiments, the configuration of the channel corresponding to the second channel format or the configuration of the channel corresponding to the third channel format includes at least one of the following configurations: a time domain resource configuration, a frequency domain resource configuration, a receive antenna configuration, a transmit antenna configuration, or a sequence configuration.

The solutions of the present disclosure will be described below with reference to specific embodiments.

### Embodiment 1:

In this embodiment, the input information of the channel estimation model may be information of a reference signal, such as information of reference signal received quality. That is to say, the communication device may first determine the first reference information that is obtained based on the reference signal corresponding to the first reference signal pattern as the first information, then convert the first information into the second information according to the second reference signal pattern, and then output the first estimation information corresponding to the first channel format with the second information as the input information by using the channel estimation model, and finally select the second estimation information corresponding to the second channel format from the first estimation information. The first reference information may be reference signal quality information, that is, the communication device may determine reference signal quality information that is obtained based on the reference signal corresponding to the first reference signal pattern as the first information.

The solutions provided by the present disclosure will be described below from the following three perspectives: conversion of reference signal information for a non-standard interface to reference signal information for a standard interface (information obtained after converting may be used as an input for training, testing, reasoning, and applying), conversion of channel information for a non-standard interface to channel information for a standard interface (information obtained after converting may be used as a training label), conversion of channel information for a standard interface to channel information for a non-standard interface (converting to an actual channel for outputting), and an implementation of a channel estimation model estimating channel information for a standard interface using reference information for a standard interface.

### I. Conversion of reference signal information for a non-standard interface to reference signal information for a standard interface.

Exemplarily, a first device receives a first reference signal sent by a second device. A pattern of the first reference signal is a first reference signal pattern, and the first reference signal pattern is an original reference signal pattern. The first reference signal pattern is a reference signal pattern of a non-standard interface, and corresponds to a signal type or configuration of the first reference signal. The configuration of the first reference signal is used to configure at least one of a transmit port of the first reference signal, a receive port of the first reference signal, density and position of the first reference signal in the time domain, or density and position of the first reference signal in the frequency domain. The first reference signal pattern may vary with different influencing factors such as the configuration of the first reference signal (e.g., a transmit port, a receive port, density and position in the time domain, or density and position in the frequency domain).

It should be understood that the first device may be any device for receiving a reference signal, that is, the first device may be a terminal device or a network device. If the first device is a terminal device, the reference signal received by the first device is a downlink reference signal. For example, the reference signal received by the first device is a CSI-RS or a downlink DMRS. If the first device is a network device, the reference signal received by the first device is an uplink reference signal. For example, the reference signal received by the first device is an SRS or an uplink DMRS. Similarly, the second device may be any device used for transmitting a reference signal, that is, the second device may be a terminal device or a network device. If the second device is a terminal device, the reference signal transmitted by the second device is an uplink reference signal. For example, the reference signal transmitted by the second device may be an SRS or an uplink DMRS. If the second device is a network device, the reference signal transmitted by the second device is a downlink reference signal. For example, the reference signal transmitted by the second device is a CSI-RS or a downlink DMRS.

It will be noted that the second device sends an original reference signal S_t, and the first device receives the original reference signal S_t. However, since the original reference signal S_t has certain changes after passing through an actual channel, the reference signal actually received by the first device is a reference signal S_r. In the solution based on a channel estimation model that is provided by the present disclosure, S_r may be used as input information.

There may be different configurations in the frequency domain for transmitting a reference signal. For example, the reference signal may be transmitted on N2 subcarriers in every N1 resource blocks (RBs), e.g., the reference signal may be transmitted on 3 subcarriers in every 1 RB, or the reference signal may be transmitted on 1 subcarrier in every 2 RBs. In addition, in terms of transmission density in the frequency domain, there may also be different transmission configurations. For example, in the case where 3 subcarriers are to be transmitted on 1 RB, these three subcarriers may be the 1st, 5th, 9th subcarriers, the 2nd, 6th, 10th subcarriers, the 3rd, 7th, 11th subcarriers, or the 4th, 8th, 12th subcarriers. Furthermore, there may also be different configurations in the time domain. For example, there are N4 positions (symbols) for transmitting the reference signal in every N3 time slots. For example, there are 1 or 2 symbols for transmitting the reference signal in every 1 time slot; as another example, there are 1 or 2 symbols for transmitting the reference signal in every 10 time slots. In addition, in terms of transmission density in the time domain, there may also be different transmission configurations. For example, in the case where one symbol in a time slot is used for transmitting the reference signal, the reference signal may be transmitted on the X-th symbol. In the case where one subcarrier in an RB is used for transmitting the reference signal, the reference signal may be transmitted on the Y-th subcarrier. In addition, different antenna configurations also affect the reference signal received by the first device. For example, different numbers of transmit antenna ports may also cause the reference signal received by the first device to be different. For example, under a configuration of K transmit ports, reference signals for K transmit ports may be transmitted, and each transmit port may correspond to a different time domain position or frequency domain position, or correspond to a different mask. As another example, different receive antenna configurations of the first device may also cause reference signals received by different UEs to be different. For example, under a configuration of K receive ports, reference signals may be received for the K receive ports, respectively.

FIG. 7 is a schematic diagram showing configurations of different reference signals provided by embodiments of the present disclosure.

As shown in FIG. 7, a reference signal received by the first device may be in different time domain spatial positions or different frequency domain spatial positions, and may have different patterns accordingly. For example, as shown in (a) of FIG. 7, the reference signal received by the first device may include 4 positions, each of which includes two consecutive resource positions. As another example, as shown in (b) of FIG. 7, the reference signal received by the first device may include 4 positions, each of which includes 4 consecutive resource positions. As yet another example, as shown in (c) of FIG. 7, the reference signal received by the first device may include 1 position. As still another example, as shown in (d) of FIG. 7, the reference signal received by the first device may include 2 positions, where these 2 positions are at the same frequency domain position. As still yet another example, as shown in (e) and (f) of FIG. 7, the reference signal received by the first device may include 8 positions. As still yet another example, as shown in (g) of FIG. 7, the reference signal received by the first device may include 4 positions. As still yet another example, as shown in (h) of FIG. 7, the reference signal received by the first device may include 2 positions, where these 2 positions are at the same time domain position.

Of course, the reference signals transmitted at the positions shown in (a) to (h) of FIG. 7 may be different sequences, and may also correspond to different masks. That is to say, the first information obtained by the first device based on the received reference signal is information that will result in different non-standard interfaces according to different configurations.

For a reference signal adapted to different configurations, the present disclosure adopts a universal solution based on a channel estimation model to obtain information for a standardized interface (i.e., the second information corresponding to the second reference signal pattern), by performing standardized interface conversion on the first information (i.e., the information corresponding to a first reference pattern) corresponding to the reference signal pattern based on the non-standard interface. In this way, the communication device may use a universal channel estimation solution, algorithm, or model based on the second information to perform estimation based on channel.

Exemplarily, different types of reference signals correspond to different configurations. For different types of configurations of reference signals, a reference signal pattern corresponding to the k-th type of configuration is the k-th type of reference signal pattern. If information corresponding to various types of reference signal patterns needs to be adapted to the same channel estimation solution or model, a combined set of patterns of these various types of reference signals may be used as a pattern of input information of the channel estimation solution, that is, use different types of reference signal patterns to generate the same reference signal pattern (i.e., the second reference signal pattern). On this basis, once the first device receives a reference signal corresponding to a first reference signal pattern, the first device may convert the first information into the second information according to the second reference signal pattern, where the first information corresponds to the first reference signal pattern and obtained based on the reference signal corresponding to the first reference signal pattern, and then inputs the second information, as an information pattern for a standard interface, into the channel estimation model for channel estimation.

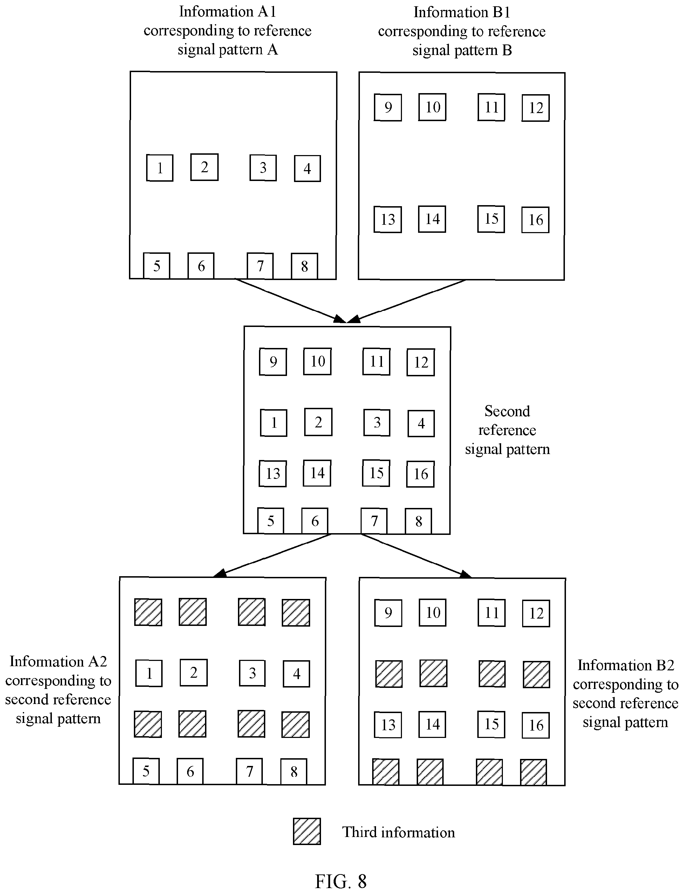

FIGS. 8 to 10 are schematic diagrams showing converting the first information into the second information according to the second reference signal pattern provided by the embodiments of the present disclosure.

As shown in FIG. 8, for reference signal pattern A, a configuration of its corresponding reference signal is located at 1st position to 8th position, and for another reference signal pattern B, a configuration of its corresponding reference signal is located at 9th position to 16th position. In this case, when getting a combined set (i.e., the second reference signal pattern) of various reference signal patterns, 1st position to 16th position may all be determined as positions that are included in the second reference signal pattern.

In the case where information A1 corresponding to reference signal pattern A is used as the first information, 0 or third information (e.g., quality information of a particular reference signal) is padded at 9th position to 16th position. For example, reference signal quality information at 1st position to 8th position is copied onto 9th position to 16th position, or pseudo reference signal quality information at 9th position to 16th position is obtained through filtering, prediction or other algorithms, so as to obtain information A2 (i.e., the second information) corresponding to the second reference signal pattern, and use information A2 as input information of the channel estimation model. In the case where information B 1 corresponding to reference signal pattern B is used as the first information, 0 or third information (e.g., quality information of a particular reference signal) is padded at 1st position to 8th position. For example, the reference signal quality information at 9th position to 16th position is copied onto 1st position to 8th position, or pseudo reference signal quality information at 1st position to 8th position is obtained through filtering, prediction or other algorithms, so as to obtain information B2 (i.e., the second information) corresponding to the second reference signal pattern, and use information B2 as input information of the channel estimation model.

It will be noted that the second reference signal pattern may be a union of various reference signal patterns (such as reference signal pattern A and reference signal pattern B), or a superset of the union of various reference signal patterns, where the superset includes the union of the various reference signal patterns.

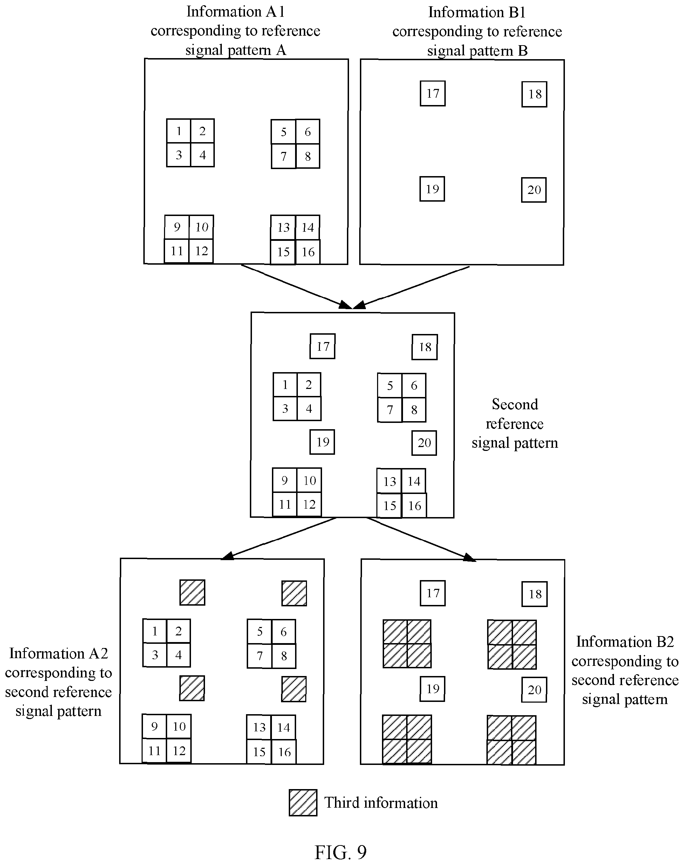

As shown in FIG. 9, for reference signal pattern A, a configuration of its corresponding reference signal is located at 1st position to 16th position (since ports of a reference signal may be aggregated and constructed in the form of mask distinction, a reference signal pattern with multiple aggregated positions may be formed, as shown in FIG. 9), and for another reference signal pattern B, a configuration of its corresponding reference signal is located at 17th position to 20th position. In this case, when getting a combined set of various reference signal patterns (i.e., the second reference signal pattern), 1st position to 20th position may all be determined as positions that are included in the second reference signal pattern.

In the case where information A1 corresponding to reference signal pattern A is used as the first information, 0 or third information (e.g., quality information of a particular reference signal) is padded at 17th position to 20th position. For example, the reference signal quality information at 1st position to 16th position is copied onto 17th position to 20th position, or pseudo reference signal quality information at 17th position to 20th position is obtained through filtering, prediction or other algorithms, so as to obtain information A2 (i.e., the second information) corresponding to the second reference signal pattern, and use information A2 as input information of the channel estimation model. In the case where information B 1 corresponding to reference signal pattern B is used as the first information, 0 or third information (e.g., quality information of a particular reference signal) is padded at 1st position to 16th position. For example, the reference signal quality information at 17th position to 20th position is copied onto 1st position to 16th position, or pseudo reference signal quality information at 1st position to 16th position is obtained through filtering, prediction or other algorithms, so as to obtain information B2 (i.e., the second information) corresponding to the second reference signal pattern, and use information B2 as input information of the channel estimation model.

It will be noted that the second reference signal pattern may be a union of various reference signal patterns (such as reference signal pattern A and reference signal pattern B), or a superset of the union of various reference signal patterns, where the superset includes the union of the various reference signal patterns.

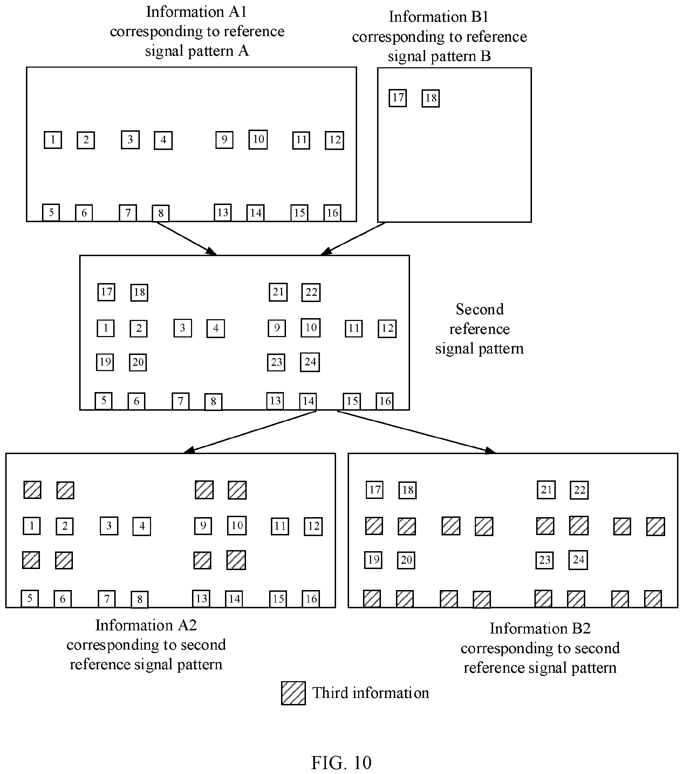

As shown in FIG. 10, different reference signal patterns may correspond to different time domain ranges and frequency domain ranges. For reference signal pattern A, a configuration of its corresponding reference signal is located at 1st position to 16th position, and for another reference signal pattern B, a configuration of its corresponding reference signal is located at 17th position and 18th position. In this case, when getting a combined set of various reference signal patterns (i.e., the second reference signal pattern), 1st position to 16th position may all be determined as positions that are included in the second reference signal pattern.

In the case where information A1 corresponding to reference signal pattern A is used as the first information, 0 or third information (e.g., quality information of a particular reference signal) is padded at 17th position to 24th position. For example, the reference signal quality information at 1st position to 16th position is copied onto 17th position to 24th position, or pseudo reference signal quality information at 17th position to 24th position is obtained through filtering, prediction or other algorithms, so as to obtain information A2 (i.e., the second information) corresponding to the second reference signal pattern, and use information A2 as input information of the channel estimation model. In the case where information B 1 corresponding to reference signal pattern B is used as the first information, 0 or third information (e.g., quality information of a particular reference signal) is padded at 1st position to 16th position and 19th position to 24th position. For example, the reference signal quality information at 17th position and 18th position is copied onto 1st position to 16th position and 19th position to 24th position, or pseudo reference signal quality information at 1st position to 16th position and 19th position to 24th position is obtained through filtering, prediction or other algorithms, so as to obtain information B2 (i.e., the second information) corresponding to the second reference signal pattern, and use information B2 as input information of the channel estimation model.

It will be noted that the second reference signal pattern may be a union of various reference signal patterns (such as reference signal pattern A and reference signal pattern B), or a superset of the union of various reference signal patterns, where the superset includes the union of the various reference signal patterns.

Exemplarily, the method for converting the first information into the second information according to the second reference signal pattern may be one or more of the following:
(1) For the first reference signal pattern, performing padding at the positions included in the second reference signal pattern other than the positions included in the first reference signal pattern with a 0, a constant, random noise, or a random number to obtain the second information;
(2) For the first reference signal pattern, performing padding, using the first information, at the positions included in the second reference signal pattern other than the positions included in the first reference signal pattern to obtain the second information; or
(3) For the first reference signal pattern, performing corresponding calculation on the first information using mathematical calculation (i.e., an averaging algorithm, a filtering algorithm, or an interpolation algorithm), and performing padding with the calculation result at the positions included in the second reference signal pattern other than the positions included in the first reference signal pattern to obtain the second information.

That is to say, in the present disclosure, for the first information corresponding to the first reference signal pattern, padding is performed on the first information according to the second reference signal pattern to obtain the second information, and the second information obtained after padding is used as input information of the channel estimation model.

In this embodiment, reference signal information for a non-standard interface may be converted into reference signal information for a standard interface. This conversion method may be used to convert a data set consisting of reference signal information for a non-standard interface into a data set of reference signal information for a standard interface. The data set obtained after converting may be used to train an algorithm or model for channel estimation issues, and may also be applied to a channel estimation algorithm or model for reference signal information for a standard interface.

### II. Conversion of channel information for a non-standard interface to channel information for a standard interface.

During training of an algorithm or model for channel estimation issues, it is also necessary to convert the channel information for a non-standard interface into the channel information for a standard interface. The channel information obtained after converting may be used as training labels. It should be understood that the channel information and the estimation information involved in the present disclosure may be replaced with each other.

The measurement of a reference signal by the first device is to obtain channel information of a corresponding channel. In fact, under different configurations of transmit ports or receive ports, a reference signal for a non-standard interface also corresponds to a channel for the non-standard interface. Therefore, when recovery of a channel is taken as the goal of a channel estimation algorithm or model construction, and the channel information is used as the training data set required for the channel estimation algorithm or the model construction, the channel information for the non-standard interface needs to be converted to the channel information for the standard interface.

In this embodiment, a channel format corresponding to estimation information output by a channel estimation model is denoted as a first channel format, and the first channel format is a channel format for a standard interface. A channel to be estimated by a communication device is denoted as a second channel, a channel format of the second channel is a second channel format, and the second channel format is a channel format for a non-standard interface. The second channel format corresponds to a configuration of the second channel, and the second channel format may vary with different influencing factors such as a transmit antenna configuration, a receive antenna configuration, a time domain configuration, and a frequency domain configuration of the second channel. In this embodiment, for the training of the channel estimation model, it is necessary to convert estimation information corresponding to the second channel format into estimation information corresponding to the first channel format.

Exemplarily, for different types of antenna configurations, a channel format corresponding to the m-th type of antenna configuration is the m-th type of channel format. If the channel estimation for various channel formats is required to be based on the same channel estimation solution or model, a combined set of these various channel formats may be determined as the first channel format, that is, as an output channel format of the channel estimation solution.

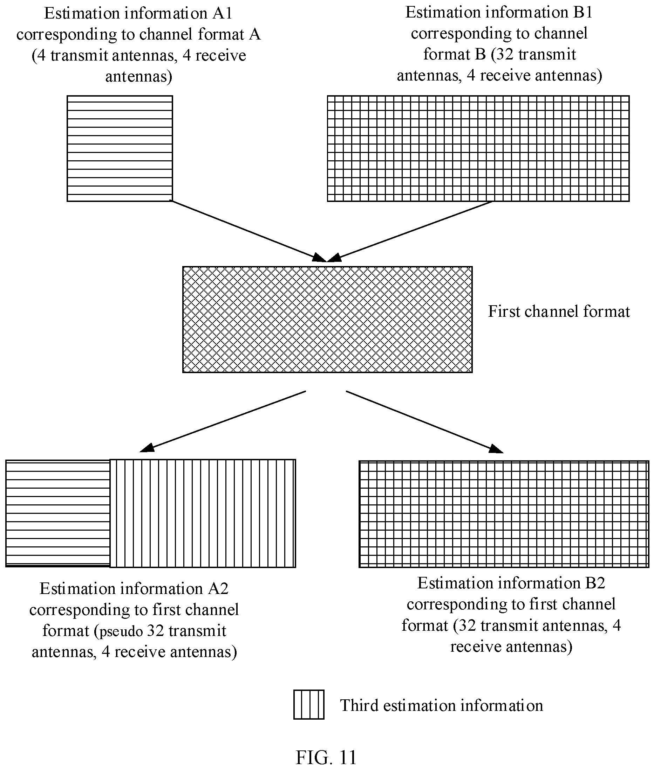

FIG. 11 is a schematic diagram based on the first channel format provided by embodiments of the present disclosure.

As shown in FIG. 11, channel format A is a channel format corresponding to 4 transmit antenna ports and 4 receive signal ports, and channel format B is a channel format corresponding to 32 transmit antenna ports and 4 receive antenna ports. For a given channel estimation model, when constructing an output interface and training set label of the model, it is necessary to convert channel format A and channel format B to the first channel format. For example, 4 transmit antennas of channel format A may be expanded to 32 transmit antennas, thereby forming a combined set (i.e., the first channel format) with channel format B. The method of expanding 4 transmit antennas to 32 transmit antennas may be that 7 placeholder data or 7 virtual transmit antennas are padded at intervals between the actual 4 transmit antennas, or that 28 placeholder data or 28 virtual transmit antennas are added outside the 4 actual transmit antennas.

In the case where estimation information A1 corresponding to channel format A is used as the second estimation information, 4 transmit antennas are expanded to 32 transmit antennas, for example, 28 placeholder data or 28 virtual transmit antennas are added outside these 4 actual transmit antennas to obtain information A2 (i.e., the first estimation information) corresponding to the first channel format, and information A2 is used as the training label of the channel estimation model. In the case where information B 1 corresponding to channel format B is used as the second estimation information, the second estimation information may be directly used as information B2 (i.e., the first estimation information) corresponding to the first channel format, and information B2 is used as the training label of the channel estimation model.

Exemplarily, the method for the first device to convert, according to the first channel format, the second estimation information corresponding to the second channel format (e.g., channel format A or channel format B) into the first channel estimation information corresponding to the first channel format may be one or more of the following:
(1) For the second channel format, adding 0, a constant, or random noise, or a random number at positions included in the first channel format other than positions included in the second channel format to obtain the first estimation information;
(2) For the second channel format, performing expanding or padding, using the second estimation information corresponding to the second channel format, at positions included in the first channel format other than positions included in the second channel format to obtain the first estimation information; or
(3) For the second channel format, performing corresponding calculation on the second estimation information according to mathematical calculation (i.e., an averaging algorithm, a filtering algorithm, or an interpolation algorithm), and performing padding with the calculation result at the positions included in the first channel format other than the positions included in the second channel format to obtain the first estimation information.

That is to say, in the present disclosure, for the second estimation information corresponding to the second channel format, padding is performed on the second estimation information according to the first channel format to obtain the first estimation information, and the first estimation information obtained after padding is used as an adhesion label of the channel estimation model.

In this embodiment, channel information for a non-standard interface may be converted into channel information for a standard interface. This conversion method may be used to convert a data set consisting of channel information for a non-standard interface into a data set of channel information for a standard interface. The data set obtained after converting may be used to train an algorithm or model for channel estimation issues.

### III. Conversion of channel information for a standard interface to channel information for a non-standard interface.

By standardizing the input interface and output interface in a channel estimation solution based on a channel estimation model, it is possible to use a unified algorithm and model for channel estimation processing for different reference signal configurations and different channel configurations, and obtain a unified algorithm and model output interface. In this embodiment, another step to be processed is to restore a channel estimation interface output by the unified model output interface to different channel information corresponding to different reference signal configurations or different channel configurations.

It will be noted that the conversion of channel information for a standard interface to channel information for a non-standard interface is an inverse operation of the conversion of the channel information for the non-standard interface to the channel information for the standard interface. That is to say, the first channel format may be converted into the second channel format according to different channel configurations and different channel features. For example, during converting the channel information for the standard interface to the channel information for the non-standard interface, information at channel positions that are used as padding portions in the channel format when forming the channel label may be deleted, and only the original channel information is retained.

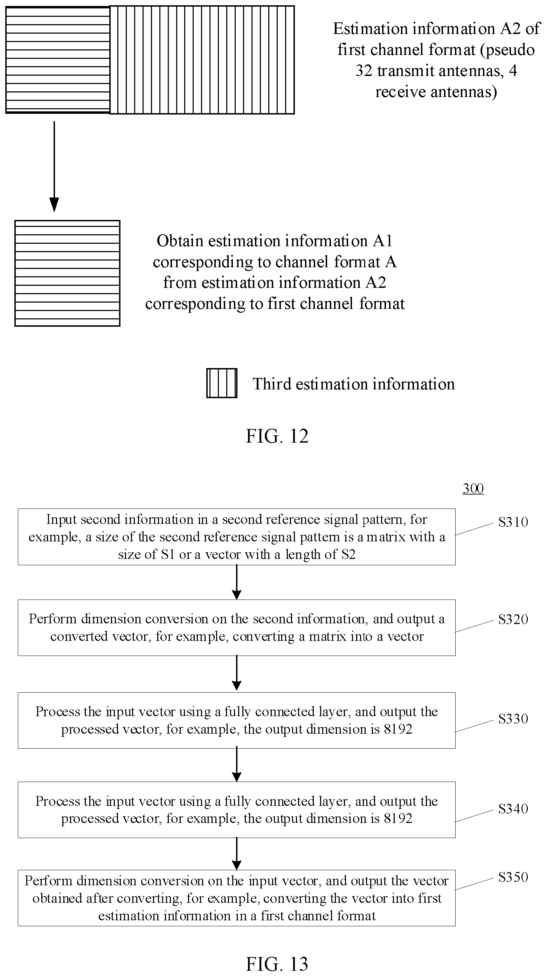

FIG. 12 is a schematic diagram showing obtaining the second estimation information from the first estimation information provided by the embodiments of the present disclosure.

As shown in FIG. 12, in the case where the channel format corresponding to the first channel format is a channel format corresponding to a 32-transmit antenna configuration and 4-receive antenna configuration, if the actual channel configuration is a 4-transmit antenna configuration and a 4-receive antenna configuration, estimation information A1 corresponding to channel format A may be extracted from estimation information A2 corresponding to the first channel format.

It should be understood that the method for extracting estimation information A1 corresponding to channel format A from estimation information A2 corresponding to the first channel format may be an inverse operation of expanding estimation information A1 corresponding to channel format A to estimation information A2 corresponding to first channel format. For example, expanding estimation information A1 corresponding to channel format A to estimation information A2 corresponding to the first channel format is implemented as follows: 7 placeholder data or 7 virtual transmit antennas are padded at intervals between actual 4 transmit antennas, or 28 placeholder data or 28 virtual transmit antennas are added outside the 4 actual transmit antennas. The method for extracting estimation information A1 corresponding to channel format A from estimation information A2 corresponding to the first channel format may be implemented by removing data corresponding to the above-mentioned placeholder data or virtual antennas.

### IV. Implementation of a channel estimation model estimating channel information for a standard interface using reference information for a standard interface.

Exemplarily, the present disclosure may utilize a channel estimation model to construct a channel estimation solution that is adaptable to different types of reference signals and different channel configurations. For example, the channel estimation model may be implemented through one or more network architectures including a fully connected network, a convolutional neural network, a residual network, and a self-attention mechanism network.

FIG. 13 is a schematic flowchart of a method 300 for obtaining first estimation information based on second information in a second reference signal pattern provided by the embodiments of the present disclosure.

As shown in FIG. 13, the method 300 may include:
S310: inputting second information in a second reference signal pattern, for example, a size of the second reference signal pattern is a matrix with a size of S 1 or a vector with a length of S2;
S320: performing dimension conversion on the second information, and outputting a converted vector, for example, converting a matrix into a vector;
S330: processing the input vector using a fully connected layer, and outputting the processed vector, for example, the output dimension is 8192;
S340: processing the input vector using a fully connected layer, and outputting the processed vector, for example, the output dimension is 8192; and
S350: performing dimension conversion on the input vector, and outputting the converted vector, for example, converting the vector into first estimation information in a first channel format.

In this embodiment, a format of input information of the channel estimation model is the second reference signal pattern, and a format of output information of the channel estimation model is the first channel format.

### Embodiment 2:

In this embodiment, input information of a channel estimation model may be local channel information, for example, channel information obtained by estimating a local position of a to-be-estimated channel based on received reference signal quality information. That is to say, the communication device may first obtain first reference information based on the reference signal corresponding to the first reference signal pattern, and then estimate, based on the first reference information, the channel information at partial positions of a channel format corresponding to the first reference signal pattern, so as to obtain estimation information, and finally determine the estimation information obtained as the first information. Thereafter, the communication device converts the first information into second information according to the second reference signal pattern, and then outputs first estimation information corresponding to the first channel format according to the channel estimation model and using the second information as input information, and finally selects second estimation information corresponding to the second channel format from the first estimation information. The first reference information may be reference signal quality information, that is, the communication device may first obtain reference signal quality information based on the reference signal corresponding to the first reference signal pattern, and then estimate, based on the obtained reference signal quality information, channel information at partial positions of the channel format corresponding to the first reference signal pattern, so as to obtain the estimation information, and finally determine the estimation information obtained as the first information.

It will be noted that in embodiment 1, the input information of the channel estimation model is the reference signal information, and what needs to be done is to convert the first information corresponding to the first reference signal pattern into the second information corresponding to the second reference signal pattern. As another optional implementation, in this embodiment, the input information of the channel estimation model may be channel information corresponding to a first local channel format. For example, local channel information corresponding to the first local channel format corresponding to the first reference signal pattern may be estimated according to a first reference signal with the first reference signal pattern. For example, the local channel information may be quality information of a local channel. In this case, first local information corresponding to the first local channel format may be converted into second local channel information according to a second local channel format. For example, the first local information corresponding to the first local channel format may be converted into second local channel information according to the second local channel format corresponding to the second reference signal pattern. The second local channel information is the input information of the channel estimation model.

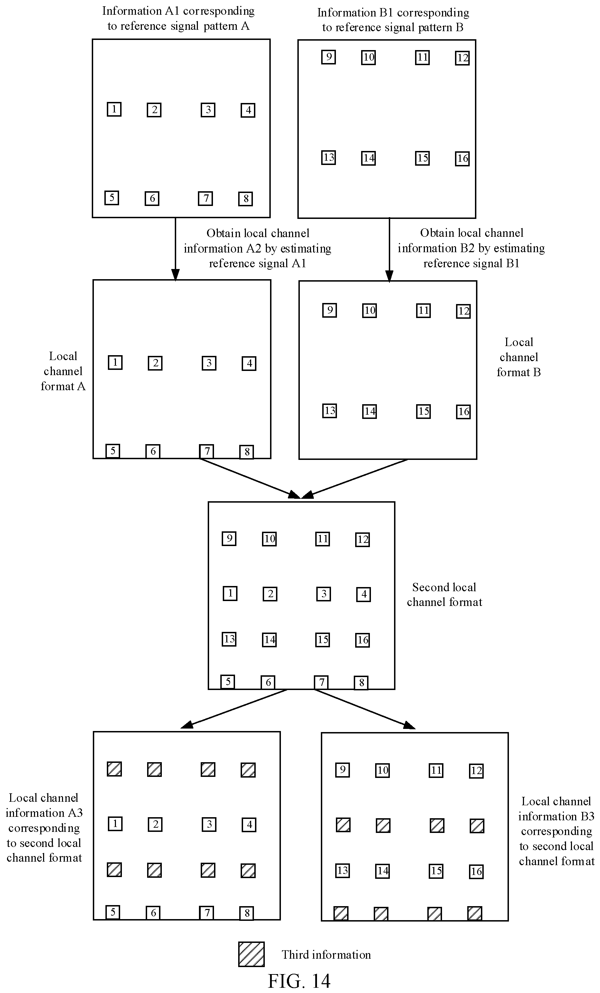

FIGS. 14 to 16 are schematic diagrams showing converting first information into second information based on a second local channel format provided by the embodiments of the present disclosure.

As shown in FIG. 14, for reference signal pattern A, a configuration of its corresponding reference signal is located at 1st position to 8th position, and for another reference signal pattern B, a configuration of its corresponding reference signal is located at 9th position to 16th position. In this case, under the above conditions, local channel information A2 corresponding to local channel format A corresponding to reference signal pattern A is estimated according to reference information A1 corresponding to reference signal pattern A. In addition, local channel information B2 corresponding to local channel format B corresponding to reference signal pattern B is estimated according to reference information B 1 corresponding to reference signal pattern B. Different local channel formats (such as local channel format A and local channel format B) are converted into the second local channel format. When getting a combined set of different local channel formats (i.e., the second local channel format), 1st position to 16th position may all be determined as positions of the second channel format.

In the case where local estimation information A2 corresponding to local channel format A is used as the first information, 0 or third information (e.g., specific channel information) is padded at 9th position to 16th position. For example, channel information at 1st position to 8th position is copied onto 9th position to 16th position, or pseudo channel information at 9th position to 16th position is obtained through filtering, prediction or other algorithms, so as to obtain information A3 (i.e., the second information) corresponding to the second local channel format, and use information A3 as input information of the channel estimation model. In the case where local estimation information B2 corresponding to local channel format B is used as the first information, 0 or third information (e.g., specific channel information) is padded at 1st position to 8th position. For example, channels at 9th position to 16th position are copied onto 1st position to 8th position, or pseudo channel information at 1st position to 8th position is obtained through filtering, prediction or other algorithms, so as to obtain information B3 (i.e., the second information) corresponding to the second local channel format, and use information B3 as input information of the channel estimation model.

It will be noted that the second local channel format may be a union of various local channel formats (such as local channel format A and local channel format B), or a superset of the union of various local channel formats, where the superset includes the union of the various local channel formats.

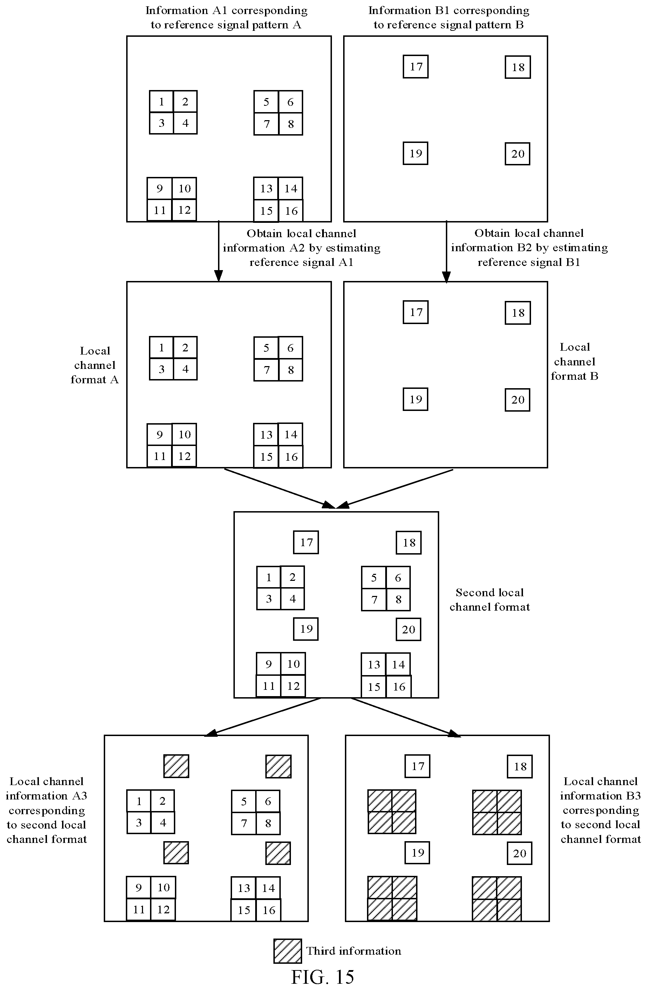

As shown in FIG. 15, for reference signal pattern A, a configuration of its corresponding reference signal is located at 1st position to 16th position (since ports of a reference signal may be aggregated and constructed in the form of mask distinction, a reference signal pattern with multiple aggregated positions may be formed, as shown in FIG. 9), and for another reference signal pattern B, a configuration of its corresponding reference signal is located at 17th position to 20th position. In this case, under the above conditions, local channel information A2 corresponding to local channel format A corresponding to reference signal pattern A is estimated according to reference information A1 corresponding to reference signal pattern A. In addition, local channel information B2 corresponding to local channel format B corresponding to reference signal pattern B is estimated according to reference information B1 corresponding to reference signal pattern B. Different local channel formats (such as local channel format A and local channel format B) are converted into the second local channel format. When getting a combined set of different local channel formats (i.e., the second local channel format), 1st position to 16th position may all be determined as positions of the second channel format.

In the case where local estimation information A2 corresponding to local channel format A is used as the first information, 0 or third information (e.g., specific channel information) is padded at 17th position to 20th position. For example, channel information at 17th position to 20th position is copied onto 1st position to 16th position, or pseudo channel information at 17th position to 20th position is obtained through filtering, prediction or other algorithms, so as to obtain information A3 (i.e., the second information) corresponding to the second local channel format, and use information A3 as input information of the channel estimation model. In the case where information B1 corresponding to a reference signal pattern is used as the first information, 0 or third information (e.g., specific channel information) is padded at 1st position to 16th position. For example, copy channel information at 17th position to 20th position onto 1st position to 16th position or obtain pseudo channel information at 1st position to 16th position through filtering, prediction or other algorithms to obtain information B3 (i.e., the second information) corresponding to the second local channel format, and use information B3 as input information of the channel estimation model.

It will be noted that the second local channel format may be a union of various local channel formats (such as local channel format A and local channel format B), or a superset of the union of various local channel formats, where the superset includes the union of the various local channel formats.

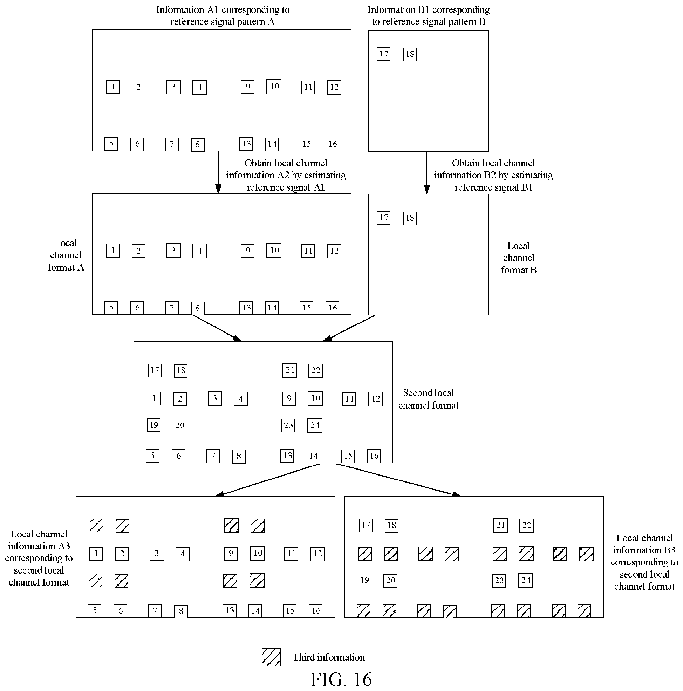

As shown in FIG. 16, different reference signal patterns may correspond to different time domain ranges and frequency domain ranges. For reference signal pattern A, a configuration of its corresponding reference signal is located at 1st position to 16th position, and for another reference signal pattern B, a configuration of its corresponding reference signal is located at 17th position and 18th position. In this case, under the above conditions, local channel information A2 corresponding to local channel format A corresponding to reference signal pattern A is estimated according to reference information A1 corresponding to reference signal pattern A. In addition, local channel information B2 corresponding to local channel format B corresponding to reference signal pattern B is estimated according to reference information B 1 corresponding to reference signal pattern B. Different local channel formats (such as local channel format A and local channel format B) are converted into the second local channel format. When getting a combined set of different local channel formats (i.e., the second local channel format), 1st position to 16th position may all be determined as positions of the second channel format.

In the case where information A1 corresponding to reference signal pattern A is used as the first information, 0 or third information (e.g., specific channel information) is padded at the 17th position to 24th position. For example, channel information at 1st position to 16th position is copied onto 17th position to 24th position, or pseudo channel information at 17th position to 24th position is obtained through filtering, prediction or other algorithms, so as to obtain information A3 (i.e., the second information) corresponding to the second local channel format, and use information A3 as input information of the channel estimation model. In the case where information B1 corresponding to reference signal pattern B is used as the first information, 0 or third information ((e.g., specific channel information) is padded at 1st position to 16th position and 19th position to 24th position. For example, channel information at 17th position and 18th position is copied onto 1st position to 16th position, and 19th position to 24th position, or pseudo channel information at 1st position to 16th position and 19th position to 24th position is obtained through filtering, prediction or other algorithms, so as to obtain information B3 (i.e., the second information) corresponding to the second local channel format, and use information B3 as input information of the channel estimation model.

It will be noted that the second reference signal pattern may be a union of various reference signal patterns (such as reference signal pattern A and reference signal pattern B), or a superset of the union of various reference signal patterns, and the superset includes the union of the various reference signal patterns.

Exemplarily, the method for converting the first information corresponding to the first local channel format into the second information according to the second local channel format may be one or more of the following:
(1) For the first local channel format, performing padding at positions included in the second local channel format other than positions included in the first local channel format with a 0, a constant, random noise, or a random number to obtain the second information;
(2) For the first local channel format, performing padding, using the first information, at positions included in the second local channel format other than positions included in the first local channel format to obtain the second information; or
(3) For the first local channel format, performing corresponding calculation on the first information according to mathematical calculation (i.e., an averaging algorithm, a filtering algorithm, or an interpolation algorithm), and performing padding with the calculation result at positions included in the second local channel format other than positions included in the first local channel format to obtain the second information.

That is to say, in the present disclosure, for the first information corresponding to the first local channel format, padding is performed according to the second local channel format to obtain the second information, and the second information obtained after padding is used as input information of the channel estimation model.

In this embodiment, reference signal information for a non-standard interface may be converted into reference signal information for a standard interface. This conversion method may be used to convert a data set consisting of reference signal information for a non-standard interface into a data set of reference signal information for a standard interface. The data set obtained after converting may be used to train an algorithm or model for channel estimation issues, and may also be applied to a channel estimation algorithm or model for reference signal information for a standard interface.

It should be understood that the conversion of channel information for a non-standard interface to channel information for a standard interface in embodiment 2 (information obtained after converting may be used as a training label) and the conversion (converting into an actual channel output) of the channel information for the standard interface to the channel information for the non-standard interface may refer to solutions described in embodiment 1, which will not be repeated here to avoid repetition.

In addition, regarding the implementation of the channel estimation model using the reference information for the standard interface to estimate the channel information for the standard interface, since it is the local channel information used as input information for channel estimation in this embodiment, compared with embodiment 1, the model structure also needs to be modified here.

Exemplarily, the present disclosure may utilize a channel estimation model to construct a channel estimation solution that is adaptable to different types of reference signals and different channel configurations. For example, the channel estimation model may be implemented through one or more network architectures including a fully connected network, a convolutional neural network, a residual network, and a self-attention mechanism network.

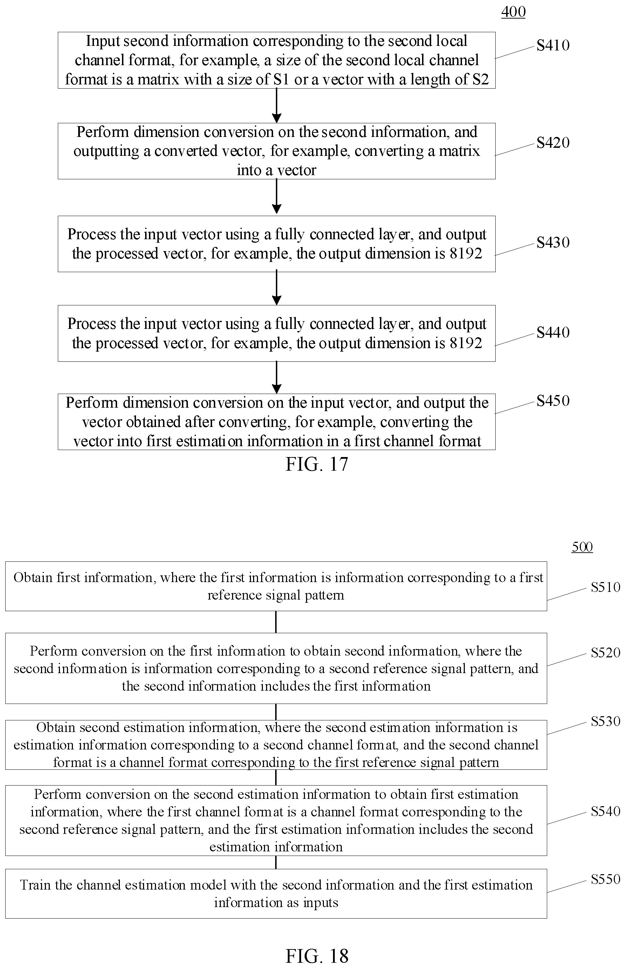

FIG. 17 is a schematic flowchart of a method 400 for obtaining the first estimation information based on the second information corresponding to the second local channel format provided by the embodiments of the present disclosure.

As shown in FIG. 17, the method may include:
S410: inputting second information corresponding to the second local channel format, for example, a size of the second local channel format is a matrix with a size of S1 or a vector with a length of S2;
S420: performing dimension conversion on the second information, and outputting a converted vector, for example, converting a matrix into a vector;
S430: processing the input vector using a fully connected layer, and outputting the processed vector, for example, the output dimension is 8192;
S440: processing the input vector using a fully connected layer, and output the processed vector, for example, the output dimension is 8192; and
S450: performing dimension conversion on the input vector, and outputting the converted vector, for example, converting the vector into first estimation information in a first channel format.

In this embodiment, a format of the input information of the channel estimation model is the second local channel format, and a format of the output information of the channel estimation model is the first channel format.

Based on the foregoing solutions, the present disclosure gives solutions for standardizing an interface of a channel estimation model for different reference signal configurations and different channel configurations. That is to say, the foregoing solutions may be used to construct a superset directed to basic reference signal patterns or basic channel information formats by operations such as merging sets under different reference signal configurations and different channel configurations, which will be applied to a machine learning and neural network based channel estimation solution for a standardized interface. The foregoing solutions may be further used to extract a channel information set corresponding to the actual reference signal configuration and channel configuration from the channel estimation solution for the standardized interface. By adopting such a design, it is possible to avoid the need to construct a large number of specialized machine learning and neural network solutions for interface adaptation facing different reference signal configurations and different channel configurations. For example, there are currently thousands of combinations of reference signal configurations or channel configurations. If machine learning and neural network based solutions are sought separately for each configuration combination, it means a large number of model updates and model adaptation works caused by different configurations even if the scenario in which UE or base station is located is relatively stable. The interface adaptation problem proposed in this solution may greatly reduce the complexity of this issue, and may achieve the construction of a universal interface design and model based on various configurations.

In other words, the solutions provided by the present disclosure can solve the contradiction between a fixed neural network interface and a non-fixed reference signal configuration or channel configuration when using a machine learning and neural network method to perform channel estimation. That is to say, the present disclosure gives a conversion design of reference signal information for a non-standard interface or local channel information for a non-standard to reference signal information for a standard interface or standard local channel information. On this basis, it is possible to implement the adaptation of input reference signal information or channel information for training, testing, reasoning, and applying to different reference signal configurations or channel configurations. In addition, based on the provided conversion of the channel information for the non-standard interface to the channel information for the standard interface, the present disclosure may use the standardized channel information obtained after converting as a training data set, and may implement a training label adapted to different reference signal configurations and channel configurations. Furthermore, the present disclosure may recover the actual channel information directed to different configurations on a unified standardized channel recovery interface through the conversion of the channel information for the standard interface to the channel information for the non-standard interface.

The preferred embodiments of the present disclosure have been described above in detail with reference to the accompanying drawings. However, the present disclosure is not limited to the specific details in the foregoing embodiments. Various simple modifications may be made to the technical solutions of the present disclosure within the technical concept of the present disclosure. These simple variants all fall within the protection scope of the present disclosure. For example, the various specific technical features described in the foregoing specific embodiments may be combined with each other in any suitable manner without conflict. In order to avoid unnecessary repetition, the various possible combinations will not be described in the present disclosure. For example, the various embodiments of the present disclosure may be arbitrarily combined, which should also be regarded as the contents disclosed in the present disclosure as long as they do not violate the concept of the present disclosure.

It should also be understood that in various method embodiments of the present disclosure, sequence numbers of the above processes do not mean the order of execution of the processes. The order of execution of each process should be determined by its functions and internal logic, and should not constitute any limitation on implementation of the embodiments of the present disclosure. Furthermore, in the embodiments of the present disclosure, terms such as "downlink" and "uplink" are intended to indicate transmission directions of signals or data, in which the term "downlink" is intended to indicate that a transmission direction of signals or data is a first direction of sending signals or data from a station to UE in a cell, and the term "uplink" is intended to indicate that a transmission direction of signals or data is a second direction of sending signals or data from UE in a cell to a station. For example, "downlink signal" indicates that a transmission direction of this signal is the first direction. In addition, in the embodiments of the present disclosure, the term "and/or" refers to an association relationship describing associated objects, which indicates that there may be three kinds of relationships. Specifically, "A and/or B" may indicate three cases that: A exists alone, both A and B exist, and B exists alone. The character "/" herein generally indicates that associated objects before and after the character "/" have an "or" relationship.

In the above, with reference to FIGS. 1 to 17, the wireless communication method provided by the embodiments of the present disclosure is described in detail from the perspective of channel estimation. With reference to FIG. 18, a method for training a channel estimation model provided by the embodiments of the present disclosure will be described below from the perspective of channel estimation model training.

FIG. 18 is a schematic flowchart of a method for training a channel estimation model provided by the embodiments of the present disclosure. The method may be performed by a communication device. Of course, in other alternative embodiments, the method 500 may also be performed by any electronic device with a data processing capability. For example, the electronic device may be implemented as a server. The server may be an independent physical server, a server cluster or distributed file system consisting of multiple physical servers, or a cloud server that provides basic cloud computing services such as a cloud service, cloud database, cloud computation, cloud function, cloud storage, network service, cloud communication, middleware service, domain name service, security service, and mega data and artificial intelligence platform. A server may be connected directly or indirectly through a wired or wireless communication, which is not limited in the present disclosure. For ease of description, the prediction method provided by the present disclosure will be described below by taking an apparatus for identifying scores of video frames as an example.

As shown in FIG. 18, the method 500 may include:
S510: obtaining first information, where the first information is information corresponding to a first reference signal pattern;
S520: performing conversion on the first information to obtain second information, where the second information is information corresponding to a second reference signal pattern, and the second information includes the first information;
S530: obtaining second estimation information, where the second estimation information is estimation information corresponding to a second channel format, and the second channel format is a channel format corresponding to the first reference signal pattern;
S540: performing conversion on the second estimation information to obtain first estimation information, where the first channel format is a channel format corresponding to the second reference signal pattern, and the first estimation information includes the second estimation information; and
S550: training the channel estimation model with the second information and the first estimation information as inputs.

In some embodiments, S510 may include:
determining first reference information obtained based on a reference signal corresponding to the first reference signal pattern as the first information; and
determining estimation information obtained by estimating, based on the first reference information, channel information at partial positions of the channel format corresponding to the first reference signal pattern as the first information.

In some embodiments, the second reference signal pattern is predefined, or configured by a network device.

In some embodiments, the second reference signal pattern includes the first reference signal pattern and at least one third reference signal pattern. S520 may include:
obtaining third information corresponding to the at least one third reference signal pattern; and
performing padding on the first information based on the third information to obtain the second information.

In some embodiments, the third information is obtained according to at least one of the following manners:
determining a preset value or a random number as the third information;
determining part or all of the first information as the third information; or
performing calculation on the first information using a first algorithm to obtain the third information.

In some embodiments, the first algorithm includes at least one of the following: an averaging algorithm, a filtering computation, or an interpolation algorithm.

In some embodiments, the second reference signal pattern is a union or superset of the first reference signal pattern and the at least one third reference signal.

In some embodiments, the second reference signal pattern is a union of the first reference signal pattern, the at least one third reference signal pattern, and at least one fourth reference signal pattern. The at least one fourth reference signal pattern is determined according to the first reference signal pattern, or the at least one fourth reference signal pattern is determined according to part or all of the at least one third reference signal pattern.

In some embodiments, a signal type of a reference signal corresponding to the first reference signal pattern is different from a signal type of a reference signal corresponding to the third reference signal pattern; and/or a configuration of the reference signal corresponding to the first reference signal pattern is different from a configuration of the reference signal corresponding to the third reference signal pattern.

In some embodiments, the configuration of the reference signal corresponding to the first reference signal pattern or the configuration of the reference signal corresponding to the third reference signal pattern includes at least one of the following configurations: a time domain resource configuration, a frequency domain resource configuration, a receive antenna configuration, a transmit antenna configuration, or a sequence configuration.

In some embodiments, the first channel format is predefined, or configured by a network device.

In some embodiments, the first channel format includes the second channel format and at least one third channel format. S540 may include:
obtaining third estimation information corresponding to the at least one third channel format; and
performing padding on the second estimation information based on the third estimation information to obtain the first estimation information.

In some embodiments, the third estimation information is obtained according to at least one of the following manners:
determining a preset value or a random number as the third estimation information;
determining part or all of the second estimation information as the third estimation information; or
performing calculation on the second estimation information using a second algorithm to obtain the third estimation information.

In some embodiments, the second algorithm includes at least one of the following: an averaging algorithm, a filtering computation, or an interpolation algorithm.

In some embodiments, the first channel format is a union or superset of the second channel format and the at least one third channel format.

In some embodiments, the first channel format is a union of the second channel format, the at least one third channel format and at least one fourth channel format. The at least one fourth channel format is determined according to the second channel format, or the at least one fourth channel format is determined according to part or all of the at least one third channel format.

In some embodiments, a type of a channel corresponding to the second channel format is different from a type of a channel corresponding to the third channel format; and/or a configuration of the channel corresponding to the second channel format is different from a configuration of the channel corresponding to the third channel format.

In some embodiments, the configuration of the channel corresponding to the second channel format or the configuration of the channel corresponding to the third channel format includes at least one of the following configurations: a time domain resource configuration, a frequency domain resource configuration, a receive antenna configuration, a transmit antenna configuration, or a sequence configuration.

In some embodiments, a reference signal corresponding to the first reference signal pattern is an uplink reference signal or a downlink reference signal.

It should be understood that the steps in method 500 may refer to the corresponding steps in wireless communication methods 200 to 400, which will not be repeated here for the sake of brevity.

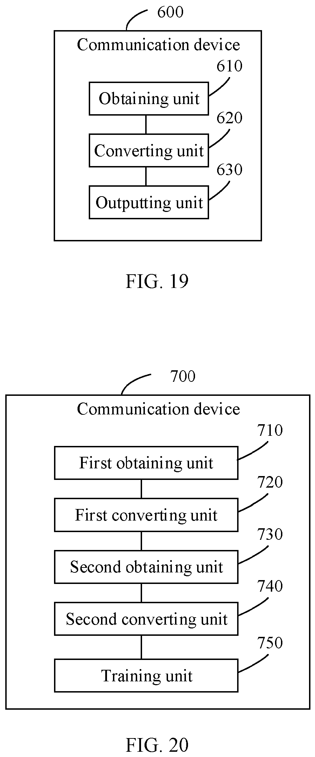

In the above, method embodiments of the present disclosure are described in detail with reference to FIGS. 1 to 18, and device embodiments of the present disclosure will be described in detail below with reference to FIGS. 19 to 22.

FIG. 19 is a schematic block diagram of a communication device 600 of the embodiments of the present disclosure.

As shown in FIG. 19, the communication device 600 may include:
an obtaining unit 610, configured to obtain first information, where the first information is information corresponding to a first reference signal pattern;
a converting unit 620, configured to perform conversion on the first information to obtain second information, where the second information is information corresponding to a second reference signal pattern, and the second information includes the first information; and
an outputting unit 630, configured to output first estimation information using a channel estimation model, with the second information as an input.

In some embodiments, the obtaining unit 610 is specifically configured to:
determine first reference information obtained based on a reference signal corresponding to the first reference signal pattern as the first information; and
determine estimation information obtained by estimating, based on the first reference information, channel information at partial positions of a channel format corresponding to the first reference signal pattern as the first information.

In some embodiments, the second reference signal pattern is predefined, or configured by a network device.

In some embodiments, the second reference signal pattern includes the first reference signal pattern and at least one third reference signal pattern. The converting unit 620 is specifically configured to:
obtain third information corresponding to the at least one third reference signal pattern; and
perform padding on the first information based on the third information to obtain the second information.

In some embodiments, the converting unit 620 is specifically configured to:
obtain the third information according to at least one of the following manners:
determining a preset value or a random number as the third information;
determining part or all of the first information as the third information; or
performing calculation on the first information using a first algorithm to obtain the third information.

In some embodiments, the first algorithm includes at least one of the following: an averaging algorithm, a filtering computation, or an interpolation algorithm.

In some embodiments, the second reference signal pattern is a union or a superset of the first reference signal pattern and the at least one third reference signal pattern.

In some embodiments, the second reference signal pattern is a union of the first reference signal pattern, the at least one third reference signal pattern and at least one fourth reference signal pattern. The at least one fourth reference signal pattern is determined according to the first reference signal pattern, or the at least one fourth reference signal pattern is determined according to part or all of the at least one third reference signal pattern.

In some embodiments, a signal type of a reference signal corresponding to the first reference signal pattern is different from a signal type of a reference signal corresponding to the third reference signal pattern; and/or a configuration of the reference signal corresponding to the first reference signal pattern is different from a configuration of the reference signal corresponding to the third reference signal pattern.

In some embodiments, the configuration of the reference signal corresponding to the first reference signal pattern or the configuration of the reference signal corresponding to the third reference signal pattern includes at least one of the following configurations: a time domain resource configuration, a frequency domain resource configuration, a receive antenna configuration, a transmit antenna configuration, or a sequence configuration.

The first estimation information is channel estimation information corresponding to a first channel format, and the first estimation information includes second estimation information corresponding to a second channel format. The first channel format is a channel format corresponding to the second reference signal pattern, and the second channel format is a channel format corresponding to the first reference signal pattern. The obtaining unit 610 is further configured to:
obtain the second estimation information from the first estimation information based on the first channel format and the second channel format.

In some embodiments, the first channel format is predefined, or configured by a network device.

In some embodiments, the first channel format includes the second channel format and at least one third channel format.

In some embodiments, the first channel format is a union or a superset of the second channel format and the at least one third channel format.

In some embodiments, the first channel format is a union of the second channel format, the at least one third channel format and at least one fourth channel format. The at least one fourth channel format is determined according to the second channel format, or the at least one fourth channel format is determined according to part or all of the at least one third channel format.

In some embodiments, a type of a channel corresponding to the second channel format is different from a type of a channel corresponding to the third channel format; and/or a configuration of the channel corresponding to the second channel format is different from a configuration of the channel corresponding to the third channel format.

16. According to the method according to claim 15, in some embodiments, the configuration of the channel corresponding to the second channel format or the configuration of the channel corresponding to the third channel format includes at least one of the following configurations: a time domain resource configuration, a frequency domain resource configuration, a receive antenna configuration, a transmit antenna configuration, or a sequence configuration.

In some embodiments, a reference signal corresponding to the first reference signal pattern is an uplink reference signal or a downlink reference signal.

It should be understood that the device embodiments and the method embodiments may correspond to each other, and similar descriptions may refer to the method embodiments. Specifically, the communication device 600 shown in FIG. 19 may correspond to a corresponding entity that executes the methods 200 to 400 in the embodiments of the present disclosure, and the foregoing and other operations and/or functions of each unit of the communication device 600 are configured to implement the corresponding procedures in each method, respectively. For brevity, they will not be repeated here.

FIG. 20 is a schematic block diagram of a communication device 700 of the embodiments of the present disclosure.

As shown in FIG. 20, the communication device 700 may include:
a first obtaining unit 710, configured to obtain first information, where the first information is information corresponding to a first reference signal pattern;
a converting unit 720, configured to perform conversion on the first information to obtain second information, where the second information is information corresponding to a second reference signal pattern, and the second information includes the first information;
a second obtaining unit 730, configured to obtain second estimation information, where the second estimation information is estimation information corresponding to a second channel format, and the second channel format is a channel format corresponding to the first reference signal pattern;
a second converting unit 740, configured to convert the second estimation information to obtain first estimation information, where the first channel format is a channel format corresponding to the second reference signal pattern, and the first estimation information includes the second estimation information; and
a training unit 750, configured to train the channel estimation model with the second information and the first estimation information as inputs.

In some embodiments, the first obtaining unit 710 is specifically configured to:
determine first reference information obtained based on a reference signal corresponding to the first reference signal pattern as the first information; and
determine estimation information obtained by estimating, based on the first reference information, channel information at partial positions of the channel format corresponding to the first reference signal pattern as the first information.

In some embodiments, the second reference signal pattern is predefined, or configured by a network device.

In some embodiments, the second reference signal pattern includes the first reference signal pattern and at least one third reference signal pattern. The first converting unit 720 is specifically configured to:
obtain third information corresponding to the at least one third reference signal pattern; and
perform padding on the first information based on the third information to obtain the second information.

In some embodiments, the first obtaining unit 720 is specifically configured to:
obtain the third information according to at least one of the following manners:
determining a preset value or a random number as the third information;
determining part or all of the first information as the third information; or
performing calculation on the first information using a first algorithm to obtain the third information

In some embodiments, the first algorithm includes at least one of the following: an averaging algorithm, a filtering computation, or an interpolation algorithm.

In some embodiments, the second reference signal pattern is a union or a superset of the first reference signal pattern and the at least one third reference signal pattern.

In some embodiments, the second reference signal pattern is a union of the first reference signal pattern, the at least one third reference signal pattern and at least one fourth reference signal pattern. The at least one fourth reference signal pattern is determined according to the first reference signal pattern, or the at least one fourth reference signal pattern is determined according to part or all of the at least one third reference signal pattern.

In some embodiments, a signal type of a reference signal corresponding to the first reference signal pattern is different from a signal type of a reference signal corresponding to the third reference signal pattern; and/or a configuration of the reference signal corresponding to the first reference signal pattern is different from a configuration of the reference signal corresponding to the third reference signal pattern.

In some embodiments, the configuration of the reference signal corresponding to the first reference signal pattern or the configuration of the reference signal corresponding to the third reference signal pattern includes at least one of the following configurations: a time domain resource configuration, a frequency domain resource configuration, a receive antenna configuration, a transmit antenna configuration, or a sequence configuration.

In some embodiments, the first channel format is predefined, or configured by a network device.

In some embodiments, the first channel format includes the second channel format and at least one third channel format. The second converting unit 740 is specifically configured to:
obtain third estimation information corresponding to the at least one third channel format; and
perform padding on the second estimation information based on the third estimation information to obtain the first estimation information.

In some embodiments, the second converting unit 740 is specifically configured to:
obtain the third estimation information according to at least one of the following manners:
determining a preset value or a random number as the third estimation information;
determining part or all of the second estimation information as the third estimation information; or
performing calculation based on a second algorithm according to the second estimation information to obtain the third estimation information.

In some embodiments, the second algorithm includes at least one of the following: an averaging algorithm, a filtering computation, or an interpolation algorithm.

In some embodiments, the first channel format is a union or a superset of the second channel format and the at least one third channel format.

In some embodiments, the first channel format is a union of the second channel format, the at least one third channel format and at least one fourth channel format. The at least one fourth channel format is determined according to the second channel format, or the at least one fourth channel format is determined according to part or all of the at least one third channel format.

In some embodiments, a type of a channel corresponding to the second channel format is different from a type of a channel corresponding to the third channel format; and/or a configuration of the channel corresponding to the second channel format is different from a configuration of the channel corresponding to the third channel format.

In some embodiments, the configuration of the channel corresponding to the second channel format or the configuration of the channel corresponding to the third channel format includes at least one of the following configurations: a time domain resource configuration, a frequency domain resource configuration, a receive antenna configuration, a transmit antenna configuration, or a sequence configuration.

In some embodiments, a reference signal corresponding to the first reference signal pattern is an uplink reference signal or a downlink reference signal.

It should be understood that the device embodiments and the method embodiments may correspond to each other, and similar descriptions may refer to the method embodiments. Specifically, the communication device 700 shown in FIG. 20 may correspond to a corresponding entity that executes the method 500 in the embodiments of the present disclosure, and the foregoing and other operations and/or functions of each unit of the communication device 700 are configured to implement the corresponding procedures in each method, respectively. For brevity, they will not be repeated here.

With reference to the accompanying drawings, the communication device in the embodiments of the present disclosure is described above from the perspective of functional modules. It should be understood that these functional modules may be implemented in the form of hardware, or instructions in the form of software, or a combination of hardware and software modules. Specifically, each step of the method embodiments in the embodiments of the present disclosure may be implemented by hardware integrated logic circuits and/or instructions in the form of software in a processor. The steps of methods disclosed with reference to the embodiments of the present disclosure may be directly implemented by a hardware decoding processor, or may be implemented by a combination of hardware and software modules in a decoding processor. Optionally, the software modules may be located in a storage medium commonly used in the art, such as a random access memory, a flash memory, a read-only memory, a programmable read-only memory, an electrically erasable programmable memory, or a register. The storage medium is located in a memory, and a processor reads information in the memory and completes the steps of the above method embodiments in combination with its hardware.

For example, the obtaining unit 610, the first obtaining unit 710 or the second obtaining unit 730 involved in the above may be implemented by a transceiver, and the converting unit 620, the outputting unit 630, the first converting unit 720, the second converting unit 740 and the training unit 750 involved in the above may be implemented by a processor.

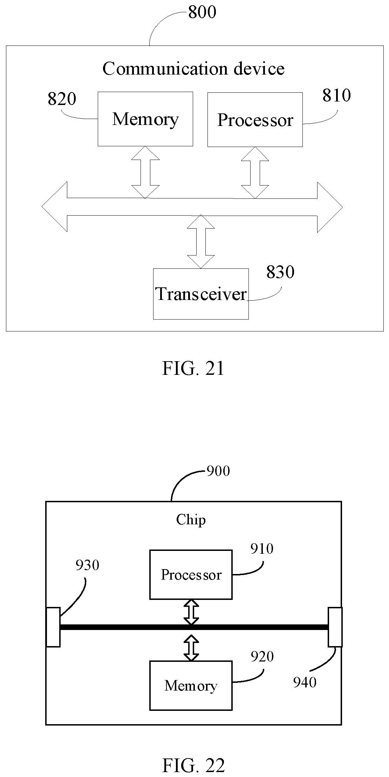

FIG. 21 is a schematic structural diagram of a communication device 800 of the embodiments of the present disclosure.

As shown in FIG. 21, the communication device 800 includes a processor 810.

The processor 810 may call and run a computer program from a memory to implement the methods in the embodiment of the present disclosure.

As shown in FIG. 21, the communication device 800 may further include a memory 820.

The memory 820 may be configured to store indication information, and may also be configured to store codes, instructions, etc., which are executed by the processor 810. The memory 820 may be a separate device independent of the processor 810 or may be integrated in the processor 810.

As shown in FIG. 21, the communication device 800 may further include a transceiver 830.

The processor 810 may control the transceiver 830 to communicate with another device, specifically, to send information or data to another device, or to receive information or data sent by another device. The transceiver 830 may include a transmitter and a receiver. The transceiver 830 may also further include antenna(s), and a number of antennas may be one or more.

It should be understood that the various components of the communication device 800 are connected to each other through a bus system. In addition to a data bus, the bus system further includes a power bus, a control bus, a status signal bus, etc.

It should also be understood that the communication device 800 may implement corresponding processes implemented by a communication device in various methods in the embodiments of the present disclosure. That is to say, the communication device 800 in these embodiments may correspond to the communication device 600 in the embodiments of the present disclosure, and may correspond to the corresponding entity performing the methods 200 to 400 according to the embodiments of the present disclosure, which is not repeated here again for the sake of brevity.

In addition, the embodiments of the present disclosure further provide a chip.

For example, the chip may be an integrated circuit chip with signal processing capability, and can implement or execute the methods, steps and logic block diagrams that are disclosed in the embodiments of the present disclosure. The chip may also be called a system-level chip, a system chip, a chip system, or a system on chip. Optionally, the chip may be applied to various communication devices, so that these communication devices with the chip installed therein can perform the methods, steps and logic block diagrams that are disclosed in the embodiments of the present disclosure.

FIG. 22 is a schematic structural diagram of a chip 900 of the embodiments of the present disclosure.

As shown in FIG. 22, the chip 900 includes a processor 910.

The processor 910 may call and run a computer program from a memory to implement the methods in the embodiments of the present disclosure.

As shown in FIG. 22, the chip 900 may further include a memory 920.

The processor 910 may call and run a computer program from the memory 920 to implement the methods in the embodiments of the present disclosure. The memory 920 may be configured to store indication information, and may also be configured to store codes, instructions, etc., which are executed by the processor 910. The memory 920 may be a separate device independent of the processor 910 or may be integrated in the processor 910.

As shown in FIG. 22, the chip 900 may further include an input interface 930.

The processor 910 may control the input interface 930 to communicate with another device or chip, specifically, to obtain information or data sent by another device or chip.

As shown in FIG. 22, the chip 900 may further include an output interface 940.

The processor 910 may control the output interface 940 to communicate with another device or chip, specifically, to output information or data to another device or chip.

It should be understood that the chip 900 may be applied to the communication devices in the embodiments of the present disclosure, and the chip can implement corresponding processes implemented by a communication device in various methods in the embodiments of the present disclosure, which is not repeated here again for the sake of brevity. It should also be understood that the various components of the chip 900 are connected to each other through a bus system. In addition to a data bus, the bus system further includes a power bus, a control bus, a status signal bus, etc.

The processors involved in the above may include, but are not limited to:
a general purpose processor, a digital signal processor (DSP), an application specific integrated circuit (ASIC), a field programmable gate array (FPGA) or another programmable logic device, a discrete gate or a transistor logic device, and a discrete hardware component.

The processor may be configured to implement or perform methods, steps and logical block diagrams that are disclosed in the embodiments of the present disclosure. The steps of the method disclosed with reference to the embodiment of the present disclosure may be directly implemented by a hardware decoding processor, or may be executed and completed by a combination of hardware and software modules in a decoding processor. The software modules may be located in a storage medium commonly used in the art, such as a random access memory, a flash memory, a read-only memory, a programmable read-only memory or an erasable programmable memory, or a register. The storage medium is located in a memory, and the processor reads information in the memory and completes the steps of the above method in combination with its hardware.

The memories involved in the above include, but are not limited to:
a volatile memory and/or a non-volatile memory. Herein, the non-volatile memory may be a read-only memory (ROM), a programmable read-only memory (programmable ROM (PROM)), an erasable programmable read-only memory (erasable PROM (EPROM)), an electrically erasable programmable read-only memory (electrically EPROM (EEPROM)), or a flash memory. The volatile memory may be a random access memory (RAM), which is used as an external cache. Through an exemplary but not limitative description, many forms of RAMs may be used, for example, a static random access memory (static RAM (SRAM)), a dynamic random access memory (dynamic RAM (DRAM)), a synchronous dynamic random access memory (synchronous DRAM (SDRAM)), a double data rate synchronous dynamic random access memory (double data rate SDRAM (DDRSDRAM)), an enhanced synchronous dynamic random access memory (enhanced SDRAM (ESDRAM)), a synchlink dynamic random access memory (synchlink DRAM (SLDRAM)), and a direct rambus random access memory (direct rambus RAM (DRRAM)).

It should be noted that the memories described herein are intended to include these and any other memories of suitable types.

The embodiments of the present disclosure further provide a computer readable storage medium, configured to store a computer program. The computer readable storage medium stores one or more programs including instructions which, when executed by a portable electronic device including multiple application programs, cause the portable electronic device to perform the wireless communication methods provided by the present disclosure. Optionally, the computer readable storage medium may be applied to the communication devices in the embodiments of the present disclosure, and the computer program causes a computer to perform corresponding processes implemented by a communication device in various methods of the embodiments of the present disclosure, which is not repeated here again for the sake of brevity.

The embodiments of the present disclosure further provide a computer program product including a computer program. Optionally, the computer program product may be applied to the communication devices in the embodiments of the present disclosure, and the computer program causes a computer to perform corresponding processes implemented by a communication device in various methods of the embodiments of the present disclosure, which is not repeated here again for the sake of brevity.

The embodiments of the present disclosure further provide a computer program. When the computer program is executed by a computer, the computer program causes the computer to perform the wireless communication methods provided by the present disclosure. Optionally, the computer program may be applied to the communication devices in the embodiments of the present disclosure, and the computer program, when executed by a computer, causes the computer to perform corresponding processes implemented by a communication device in various methods of the embodiments of the present disclosure, which is not repeated here again for the sake of brevity.

The embodiments of the present disclosure further provide a communication system, which includes the terminal device and the network device involved above, so as to form the communication system shown in FIG. 1, which is not repeated here again for the sake of brevity. It will be noted that the term "system" herein may also be referred to as "network management architecture", "network system", or the like.

It should also be understood that the terms used in the embodiments of the present disclosure and the accompanying claims are for the purpose of describing specific embodiments only but are not intended to limit the embodiments of the present disclosure. For example, the singular forms "a/an", "the", "the above" and "this/these" used in the embodiments of the present disclosure and the accompanying claims are also intended to include the plural forms unless the context clearly indicates other meanings.

Those skilled in the art may recognize that the exemplary units and algorithm steps described in combination with the embodiments disclosed herein can be implemented in electronic hardware, or a combination of computer software and electronic hardware. Whether these functions are executed in hardware or software depends on a particular application and a design constraint condition of a technical solution. Those skilled in the art may use different methods to implement the described functions in respect to each particular application, but such implementation should not be considered to be beyond the scope of embodiments of the present disclosure. The function units may be stored in a computer readable storage medium if implemented in a form of software functional units and sold or used as a separate product. Based on this understanding, the technical solutions of embodiments of the present disclosure, in essence, or the part contributing to the existing technology, or a part of the technical solution, may be embodied in a form of a software product. The computer software product is stored in a storage medium, including several instructions for enabling a computer device (which may be a personal computer, a server, a network device, or the like) to perform all or some of the steps of the methods described in various embodiments of the present disclosure. And the aforementioned storage media include various kinds of media capable of storing program codes, such as a USB flash disk, a removable hard disk, a read-only memory (ROM), a random access memory (RAM), a magnetic disk, an optical disk, and the like.

Those skilled in the art may clearly learn that for convenience and conciseness of description, the specific working processes of the systems, devices and units described above may refer to the corresponding processes in the aforementioned method embodiments and are not repeated here again. In several embodiments provided by the present disclosure, it should be understood that the disclosed systems, devices and methods may be implemented in another manner. For example, the division of the units, modules or components in the above-mentioned device embodiments is only a logical function division, and there may be another division manner in an actual implementation. For example, multiple units, modules or components may be combined or integrated into another system, or some units or components may be ignored or not executed. As another example, the units/modules/components described above as separate/display components may or may not be physically separated, i.e., they may be located in a single place or may be distributed over multiple network units. Some or all of the units/modules/components therein may be selected according to an actual requirement to achieve a purpose of a solution the embodiments of the present disclosure. Finally, it will be noted that the mutual coupling or direct coupling or communication connection shown or discussed in the above may be indirect coupling or communication connection through some interfaces, devices or units, and may be in electrical, mechanical or other forms.

What are described above are merely specific embodiments of the present disclosure, but the protection scope of the embodiments of the present disclosure is not limited thereto. Any variation or substitution that may be easily conceived by a person skilled in the art within the technical scope disclosed by the present disclosure shall be included within the protection scope of the present disclosure. Therefore, the protection scope of the embodiments of the present disclosure shall be subject to the protection scope of the claims.

## Claims

1. A channel estimation method, comprising:
obtaining first information, wherein the first information is information corresponding to a first reference signal pattern;
performing conversion on the first information to obtain second information, wherein the second information is information corresponding to a second reference signal pattern, and the second information comprises the first information; and
outputting first estimation information using a channel estimation model, with the second information as an input.

2. The method according to claim 1, wherein obtaining the first information comprises:
determining first reference information obtained based on a reference signal corresponding to the first reference signal pattern as the first information; and
determining estimation information obtained by estimating, based on the first reference information, channel information at partial positions of a channel format corresponding to the first reference signal pattern as the first information.

3. The method according to claim 1 or 2, wherein the second reference signal pattern is predefined, or configured by a network device.

4. The method according to any one of claims 1 to 3, wherein the second reference signal pattern comprises the first reference signal pattern and at least one third reference signal pattern; and
performing conversion on the first information to obtain the second information comprises:
obtaining third information corresponding to the at least one third reference signal pattern; and
performing padding on the first information based on the third information to obtain the second information.

5. The method according to claim 4, wherein obtaining the third information corresponding to the at least one third reference signal pattern comprises:
obtaining the third information according to at least one of following manners:
determining a preset value or a random number as the third information;
determining part or all of the first information as the third information; or
performing calculation on the first information using a first algorithm to obtain the third information.

6. The method according to claim 5, wherein the first algorithm comprises at least one of following: an averaging algorithm, a filtering computation, or an interpolation algorithm.

7. The method according to any one of claims 4 to 6, wherein the second reference signal pattern is a union or superset of the first reference signal pattern and the at least one third reference signal pattern.

8. The method according to claim 7, wherein the second reference signal pattern is a union of the first reference signal pattern, the at least one third reference signal pattern and at least one fourth reference signal pattern; and the at least one fourth reference signal pattern is determined according to the first reference signal pattern, or the at least one fourth reference signal pattern is determined according to part or all of the at least one third reference signal pattern.

9. The method according to any one of claims 4 to 8, wherein a signal type of a reference signal corresponding to the first reference signal pattern is different from a signal type of a reference signal corresponding to the third reference signal pattern; and/or a configuration of the reference signal corresponding to the first reference signal pattern is different from a configuration of the reference signal corresponding to the third reference signal pattern.

10. The method according to claim 9, wherein the configuration of the reference signal corresponding to the first reference signal pattern or the configuration of the reference signal corresponding to the third reference signal pattern comprises at least one of following configurations: a time domain resource configuration, a frequency domain resource configuration, a receive antenna configuration, a transmit antenna configuration, or a sequence configuration.

11. The method according to any one of claims 1 to 10, wherein the first estimation information is channel estimation information corresponding to a first channel format, the first estimation information comprises second estimation information corresponding to a second channel format, the first channel format is a channel format corresponding to the second reference signal pattern, and the second channel format is a channel format corresponding to the first reference signal pattern; and
the method further comprises:
obtaining the second estimation information from the first estimation information based on the first channel format and the second channel format.

12. The method according to claim 11, wherein the first channel format is predefined, or configured by a network device.

13. The method according to claim 11 or 12, wherein the first channel format comprises the second channel format and at least one third channel format.

14. The method according to claim 13, wherein the first channel format is a union or superset of the second channel format and the at least one third channel format.

15. The method according to claim 14, wherein the first channel format is a union of the second channel format, the at least one third channel format and at least one fourth channel format; and the at least one fourth channel format is determined according to the second channel format, or the at least one fourth channel format is determined according to part or all of the at least one third channel format.

16. The method according to any one of claims 13 to 15, wherein a type of a channel corresponding to the second channel format is different from a type of a channel corresponding to the third channel format; and/or a configuration of the channel corresponding to the second channel format is different from a configuration of the channel corresponding to the third channel format.

17. The method according to claim 16, wherein the configuration of the channel corresponding to the second channel format or the configuration of the channel corresponding to the third channel format comprises at least one of following configurations: a time domain resource configuration, a frequency domain resource configuration, a receive antenna configuration, a transmit antenna configuration, or a sequence configuration.

18. The method according to any one of claims 1 to 17, wherein a reference signal corresponding to the first reference signal pattern is an uplink reference signal or a downlink reference signal.

19. A method for training a channel estimation model, comprising:
obtaining first information, wherein the first information is information corresponding to a first reference signal pattern;
performing conversion on the first information to obtain second information, wherein the second information is information corresponding to a second reference signal pattern, and the second information comprises the first information;
obtaining second estimation information, wherein the second estimation information is estimation information corresponding to a second channel format, and the second channel format is a channel format corresponding to the first reference signal pattern;
performing conversion on the second estimation information to obtain first estimation information, wherein the first channel format is a channel format corresponding to the second reference signal pattern, and the first estimation information comprises the second estimation information; and
training the channel estimation model with the second information and the first estimation information as inputs.

20. The method according to claim 19, wherein obtaining the first information comprises:
determining first reference information obtained based on a reference signal corresponding to the first reference signal pattern as the first information; and
determining estimation information obtained by estimating, based on the first reference information, channel information at partial positions of the channel format corresponding to the first reference signal pattern as the first information.

21. The method according to claim 19 or 20, wherein the second reference signal pattern is predefined, or configured by a network device.

22. The method according to any one of claims 19 to 21, wherein the second reference signal pattern comprises the first reference signal pattern and at least one third reference signal pattern, and
performing conversion on the first information to obtain the second information comprises:
obtaining third information corresponding to the at least one third reference signal pattern; and
performing padding on the first information based on the third information to obtain the second information.

23. The method according to claim 22, wherein obtaining third information corresponding to the at least one third reference signal pattern comprises:
obtaining the third information according to at least one of following manners:
determining a preset value or a random number as the third information;
determining part or all of the first information as the third information; or
performing calculation on the first information using a first algorithm to obtain the third information.

24. The method according to claim 23, wherein the first algorithm comprises at least one of following: an averaging algorithm, a filtering computation, or an interpolation algorithm.

25. The method according to any one of claims 22 to 24, wherein the second reference signal pattern is a union or superset of the first reference signal pattern and the at least one third reference signal pattern.

26. The method according to claim 25, wherein the second reference signal pattern is a union of the first reference signal pattern, the at least one third reference signal pattern and at least one fourth reference signal pattern; and the at least one fourth reference signal pattern is determined according to the first reference signal pattern, or the at least one fourth reference signal pattern is determined according to part or all of the at least one third reference signal pattern.

27. The method according to any one of claims 22 to 26, wherein a signal type of a reference signal corresponding to the first reference signal pattern is different from a signal type of a reference signal corresponding to the third reference signal pattern; and/or a configuration of the reference signal corresponding to the first reference signal pattern is different from a configuration of the reference signal corresponding to the third reference signal pattern.

28. The method according to claim 27, wherein the configuration of the reference signal corresponding to the first reference signal pattern or the configuration of the reference signal corresponding to the third reference signal pattern comprises at least one of following configurations: a time domain resource configuration, a frequency domain resource configuration, a receive antenna configuration, a transmit antenna configuration, or a sequence configuration.

29. The method according to any one of claims 19 to 28, wherein the first channel format is predefined, or configured by a network device.

30. The method according to claim any one of 19 to 29, wherein the first channel format comprises the second channel format and at least one third channel format;
performing conversion on the second estimation information to obtain the first estimation information comprises:
obtaining third estimation information corresponding to the at least one third channel format; and
performing padding on the second estimation information based on the third estimation information to obtain the first estimation information.

31. The method according to claim 30, wherein obtaining the third estimation information corresponding to the at least one third channel format comprises:
obtaining the third estimation information according to at least one of following manners:
determining a preset value or a random number as the third estimation information;
determining part or all of the second estimation information as the third estimation information; or
performing calculation on the second estimation information using a second algorithm to obtain the third estimation information.

32. The method according to claim 31, wherein the second algorithm comprises at least one of: an averaging algorithm, a filtering computation, or an interpolation algorithm.

33. The method according to any one of claims 30 to 32, wherein the first channel format is a union or superset of the second channel format and the at least one third channel format.

34. The method according to claim 33, wherein the first channel format is a union of the second channel format, the at least one third channel format and at least one fourth channel format; and the at least one fourth channel format is determined according to the second channel format, or the at least one fourth channel format is determined according to part or all of the at least one third channel format.

35. The method according to any one of claims 30 to 34, wherein a type of a channel corresponding to the second channel format is different from a type of a channel corresponding to the third channel format; and/or a configuration of the channel corresponding to the second channel format is different from a configuration of the channel corresponding to the third channel format.

36. The method according to claim 35, wherein the configuration of the channel corresponding to the second channel format or the configuration of the channel corresponding to the third channel format comprises at least one of following configurations: a time domain resource configuration, a frequency domain resource configuration, a receive antenna configuration, a transmit antenna configuration, or a sequence configuration.

37. The method according to any one of claims 19 to 36, wherein a reference signal corresponding to the first reference signal pattern is an uplink reference signal or a downlink reference signal.

38. A communication device, comprising:
a first obtaining unit, configured to obtain first information, wherein the first information is information corresponding to a first reference signal pattern;
a converting unit, configured to perform conversion on the first information to obtain second information, wherein the second information is information corresponding to a second reference signal pattern, and the second information comprises the first information; and
an outputting unit, configured to output first estimation information using a channel estimation model, with the second information as an input.

39. A communication device, comprising:
a first obtaining unit, configured to obtain first information, wherein the first information is information corresponding to a first reference signal pattern;
a converting unit, configured to perform conversion on the first information to obtain second information, wherein the second information is information corresponding to a second reference signal pattern, and the second information comprises the first information;
a second obtaining unit, configured to obtain second estimation information, wherein the second estimation information is estimation information corresponding to a second channel format, and the second channel format is a channel format corresponding to the first reference signal pattern;
a second converting unit, configured to perform conversion on the second estimation information to obtain first estimation information, wherein the first channel format is a channel format corresponding to the second reference signal pattern, and the first estimation information comprises the second estimation information; and
a training unit, configured to train the channel estimation model with the second information and the first estimation information as inputs.

40. A communication device, comprising:
a processor and a memory, wherein the memory is configured to store a computer program, and the processor is configured to call and run the computer program stored in the memory to perform the method according to any one of claims 1 to 18.

41. A communication device, comprising:
a processor and a memory, wherein the memory is configured to store a computer program, and the processor is configured to call and run the computer program stored in the memory to perform the method according to any one of claims 19 to 37.

42. A chip, comprising:
a processor, configured to call and run a computer program from a memory to cause a device installed with the chip to perform the method according to any one of claims 1 to 18 or the method according to any one of claims 19 to 37.

43. A computer-readable storage medium, configured to store a computer program, wherein the computer program causes a computer to perform the method according to any one of claims 1 to 18 or the method according to any one of claims 19 to 37.

44. A computer program product, comprising computer program instructions, wherein the computer program instructions cause a computer to perform the method according to any one of claims 1 to 18 or the method according to any one of claims 19 to 37.

45. A computer program, wherein the computer program causes a computer to perform the method according to any one of claims 1 to 18 or the method according to any one of claims 19 to 37.
